(19) Europäisches Patentamt / European Patent Office / Office européen des brevets

(11) **EP 4 027 113 A1**

(12) **EUROPEAN PATENT APPLICATION**
published in accordance with Art. 153(4) EPC

(43) Date of publication:
**13.07.2022 Bulletin 2022/28**

(21) Application number: **20872191.0**

(22) Date of filing: **19.06.2020**

(51) International Patent Classification (IPC):
*G01C 21/34* (2006.01)

(52) Cooperative Patent Classification (CPC):
**G01C 21/34**

(86) International application number:
**PCT/CN2020/097114**

(87) International publication number:
**WO 2021/063032 (08.04.2021 Gazette 2021/14)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **30.09.2019 CN 201910944453**

(71) Applicant: **Huawei Technologies Co., Ltd.**
**Longgang District**
**Shenzhen, Guangdong**
**518129 (CN)**

(72) Inventors:
• **WU, Zixian**
  **Shenzhen, Guangdong 518129 (CN)**
• **YANG, Zhipeng**
  **Shenzhen, Guangdong 518129 (CN)**
• **WANG, Jun**
  **Shenzhen, Guangdong 518129 (CN)**

(74) Representative: **Körber, Martin Hans**
**Mitscherlich PartmbB**
**Patent- und Rechtsanwälte**
**Sonnenstraße 33**
**80331 München (DE)**

(54) **METHOD AND APPARATUS FOR TRAVEL PLANNING**

(57) A driving planning method and apparatus are provided, and applied to an automated driving system. The method includes: selecting, from at least one driving path of a vehicle from a departure place to a destination with reference to a remaining energy condition of the vehicle, a target driving path on which shortest time is consumed and remaining energy of the vehicle ensures that the vehicle can arrive at the destination and corresponding target driving configuration information; or selecting, from at least one driving path of a vehicle from a departure place to a destination with reference to a remaining energy condition of the vehicle, a driving path on which minimum energy is consumed, remaining energy of the vehicle ensures that the vehicle can arrive at the destination, and the vehicle can arrive at the destination before a user-set arrival time point, and corresponding target driving configuration information; and controlling the vehicle to be automatically driven through the selected driving path based on the corresponding target driving configuration information. The method is applied to an intelligent vehicle/electric vehicle, so that the automated driving system can plan a path based on an actual condition of the vehicle, to better meet a user requirement.

FIG. 3

**Description**

**CROSS-REFERENCE TO RELATED APPLICATIONS**

This application claims priority to Chinese Patent Application No. 201910944453.2, filed with the China National Intellectual Property Administration on September 30, 2019 and entitled "DRIVING PLANNING METHOD AND APPARATUS", which is incorporated herein by reference in its entirety.

**TECHNICAL FIELD**

This application relates to the field of autonomous driving technologies, and in particular, to a driving planning method and apparatus.

**BACKGROUND**

With the advent of the era of autonomous driving, intelligent vehicles have become a key research objective of major manufacturers. Currently, the autonomous driving includes auxiliary driving and autonomous driving. Key technologies for implementing the autonomous driving include sensing and positioning, planning and decision, and execution and control. The planning and decision includes two aspects: decision and planning. The planning mainly includes driving planning, path planning, speed planning, and the like.

However, existing path planning solutions still use simple planning concepts, for example, simple route planning based on a time-saving requirement or simple route planning based on an energy-saving requirement. With development of science and technology, a user requirement is increasingly high, and an existing path planning manner has no good implementation, and therefore it is difficult to meet the increasingly high user requirement.

**SUMMARY**

This application provides a driving planning method and apparatus, to implement path planning with reference to an actual condition of an intelligent vehicle, so as to better meet a user requirement.

According to a first aspect, this application provides a driving planning method that may be performed by a driving planning module in an automated driving system, or may be performed by a chip that has a driving planning capability. This is not limited herein this application. The method includes: first presenting a time-saving driving mode icon and an energy-saving driving mode icon in a user interface of a vehicle, where the time-saving driving mode icon indicates a time-saving mode in driving modes; the energy-saving driving mode icon indicates an energy-saving mode in the driving modes; when the vehicle is driven in the time-saving mode, remaining energy of the vehicle can ensure that the vehicle consumes shortest time to arrive at a destination from a departure place; and when the vehicle is driven in the energy-saving mode, remaining energy of the vehicle can ensure that the vehicle consumes minimum energy to arrive at the destination from the departure place before a specified time point; then receiving a driving mode selection instruction, and selecting a target driving path from at least one driving path of the vehicle from the departure place to the destination based on a driving mode selected based on the driving mode selection instruction; and next controlling the vehicle to be driven through the target driving path.

According to the foregoing solution, a plurality of driving modes may be provided for a user via a user-friendly user interface. After the user selects a corresponding driving mode, a driving planning mode may select a more appropriate driving path for the user with reference to a current remaining energy condition of the vehicle. Therefore, path planning may be performed with reference to an actual condition of the vehicle, to better meet a user requirement.

In a possible implementation, if the driving mode selected based on the driving mode selection instruction is the time-saving mode, an estimated time point of arrival at the destination and/or estimated total consumed time may be further presented in the user interface. The estimated time point of arrival at the destination may be an estimated arrival time point at which the vehicle arrives at the destination from the departure place through the target driving path, and the estimated total consumed time may be estimated duration required when the vehicle arrives at the destination from the departure place through the target driving path.

According to the foregoing solution, after a driving path that is in the time-saving mode and that meets an actual condition of the vehicle is planned, approximate time to arrive at the destination may be presented for the user in the user interface, and/or information about duration required to arrive at the destination from the departure place may be presented in the user interface, to better provide user experience for the user and meet a user requirement.

In another possible implementation, if the driving mode selected based on the driving mode selection instruction is the energy-saving mode, estimated saved energy may be further presented in the user interface. The estimated saved energy is a value of estimated energy that can be saved when the vehicle arrives at the destination from the departure place through the target driving path.

According to the foregoing solution, after a driving path that is in the energy-saving mode and that meets an actual condition of the vehicle is planned, a value of energy that can be saved to arrive at the destination may be presented for the user in the user interface, to better provide user experience for the user and meet a user requirement.

In a possible implementation, when the driving mode selected based on the driving mode selection instruction is the time-saving mode, the selecting a target driving path from at least one driving path of the vehicle from the departure place to the destination based on a driving mode selected based on the driving mode selection instruction may be implemented in the following manner:

performing the following processing on any driving path L in the at least one driving path:

dividing the driving path L into at least one sub-path, and determining a maximum vehicle speed and a minimum vehicle speed on each sub-path, where the maximum vehicle speed is determined based on a road type-based speed limit, a weather type-based speed limit, and a congestion condition-based speed limit on the corresponding sub-path, and the minimum vehicle speed is a preset uniform driving vehicle speed at which the vehicle is most energy-saving;

determining different driving configuration information of the vehicle on the driving path L based on the maximum vehicle speed and the minimum vehicle speed on each sub-path and different operation modes of the vehicle, and determining respective duration consumed when the vehicle arrives at the destination from the departure place through the driving path L based on the different driving configuration information;

obtaining current remaining energy of the vehicle, where for example, current remaining energy of the vehicle may be obtained from an energy storage module in the automated driving system; and selecting, from the different driving configuration information based on an ascending order of consumed duration, driving configuration information that is the first to meet a first condition as target driving configuration information of the driving path L, where the meeting the first condition specifically means that energy required when the vehicle arrives at the destination from the departure place through the driving path L based on the target driving configuration information is less than the current remaining energy of the vehicle; and

selecting a first driving path from the at least one driving path as the target driving path, where the first driving path is a driving path that corresponds to shortest consumed duration in target driving configuration information corresponding to the at least one driving path.

According to the foregoing solution, with reference to an actual condition of the vehicle, for example, a remaining energy condition of the vehicle, the automated driving system may plan a driving path to the destination with shortest consumed time and target driving configuration information corresponding to the driving path. Therefore, when the vehicle is automatically driven to the destination through the determined driving path based on the target driving configuration information corresponding to the determined driving path, it can be ensured that remaining energy of the vehicle is sufficient and short time is used.

In a possible implementation, the meeting the first condition may specifically mean that energy required when the vehicle arrives at the destination from the departure place through the driving path L based on the target driving configuration information is not greater than a difference between the current remaining energy of the vehicle and a first reserved value. The first reserved value may be determined based on a value of energy required when the vehicle arrives at an energy supplemental station near the destination from the destination.

According to this solution, it can be ensured that when the vehicle is automatically driven to the destination, inconvenience caused because energy exhaustion prevents the vehicle from arriving at the energy supplemental station for energy supplementation, or because an accident during autonomous driving prevents the vehicle from arriving at the destination by using remaining energy of the vehicle is avoided, to better improve user experience.

In a possible implementation, when the driving mode selected based on the driving mode selection instruction is the energy-saving mode, the selecting a target driving path from at least one driving path of the vehicle from the departure place to the destination based on a driving mode selected based on the driving mode selection instruction may be implemented in the following manner:

performing the following processing on any driving path L in the at least one driving path:

dividing the driving path L into at least one sub-path, and determining a maximum vehicle speed and a minimum vehicle speed on each sub-path, where the maximum vehicle speed is determined based on a road type-based speed limit, a weather type-based speed limit, and a congestion condition-based speed limit on the corresponding sub-path, and the minimum vehicle speed is a preset uniform driving vehicle speed at which the vehicle is most energy-saving;

determining different driving configuration information of the vehicle on the driving path L based on the maximum vehicle speed and the minimum vehicle speed on each sub-path and different operation modes of the vehicle, and determining respective duration and energy consumed when the vehicle arrives at the destination from the departure place through the driving path L based on the different driving configuration information;

obtaining current remaining energy of the vehicle, and selecting, from the different driving configuration information based on an ascending order of energy consumption, driving configuration information that is the first to meet a second condition as target driving configuration information of the driving path L, where the second condition includes a first sub-condition and a second sub-condition, the first sub-condition specifically means that energy required when the vehicle arrives at the destination from the departure place through the driving path L based on the target driving configuration information is less than the current remaining energy of the vehicle, the second sub-condition specifically means that duration consumed when the vehicle arrives at the destination from the departure place through the driving path L based on the target driving configuration information is not greater than specified duration, the specified duration is duration between a time point at which the vehicle leaves the departure place and the specified time point, and the specified time point is a time point at which a user requests to arrive at the destination; and

selecting a second driving path from the at least one driving path as the target driving path, where the second driving path is a driving path that corresponds to minimum energy consumption in target driving configuration information corresponding to the at least one driving path.

According to the foregoing solution, with reference to an actual condition of the vehicle, for example, a remaining energy condition of the vehicle, the automated driving system may plan a driving path through which the vehicle can consume minimum energy to arrive at the destination before the specified time point at which the user expects to arrive at the destination and target driving configuration information corresponding to the driving path. Therefore, when the vehicle is automatically driven to the destination based on the corresponding target driving configuration information through the driving path, it can be ensured that energy of the vehicle is sufficient, less energy is consumed, and the vehicle can arrive at the destination before the specified time point at which the user expects to arrive at the destination. Therefore, a user requirement can be better met.

In a possible implementation, the first sub-condition may specifically mean that energy consumed when the vehicle arrives at the destination from the departure place through the driving path L based on the target driving configuration information is not greater than a difference between the current remaining energy of the vehicle and a second reserved value. The second reserved value may be determined based on a value of energy required when the vehicle arrives at an energy supplemental station near the destination from the destination.

According to this solution, it can be ensured that when the vehicle is automatically driven to the destination, inconvenience caused because energy exhaustion prevents the vehicle from arriving at the energy supplemental station for energy supplementation, or because an accident during autonomous driving prevents the vehicle from arriving at the destination by using remaining energy of the vehicle is avoided, to better improve user experience.

In a possible implementation, the second sub-condition may specifically mean that duration consumed when the vehicle arrives at the destination from the departure place through the driving path L based on the target driving configuration information is not greater than a difference between the specified duration and a third reserved value. The third reserved value may be determined through calculation based on a traffic congestion condition on the at least one driving path.

According to the foregoing solution, it can be ensured that when the vehicle is automatically driven to the destination, a problem that due to temporary congestion on a road caused by a traffic accident condition during autonomous driving, the vehicle cannot arrive at the destination before the user's expected arrival time point when the vehicle is controlled based on the target driving configuration information is avoided, to better improve user experience.

For example, the operation mode may include one or more of a sport mode, a normal mode, and an eco mode. Acceleration/deceleration in the sport mode is greater than that in the normal mode, and the acceleration/deceleration in the normal mode is greater than that in the eco mode. Based on this, the different driving configuration information of the vehicle may be obtained by combining different vehicle speeds on the at least one sub-path and an operation mode used on the at least one sub-path. It should be understood that the foregoing three operation modes are generally three operation modes available to most vehicles at present. With development of vehicle technologies, more other types of operation modes may appear in the future. This application may also cover the other types of operation modes, and this is not limited herein.

In a possible embodiment, the determining respective duration consumed when the vehicle arrives at the destination from the departure place through the driving path L based on the different driving configuration information may meet but is not limited to a requirement of the following formula:

$$T = \sum_i \frac{S_i}{v_i} + \frac{v_i}{2a_{iAcc}} + \frac{v_i}{2a_{iDec}},$$

where

T may represent duration consumed when the vehicle arrives at the destination from the departure place through the driving path L based on first driving configuration information, and the first driving configuration information is any one of the different driving configuration information; and i may represent a sub-path identifier of a sub-path Li in the at least one sub-path, i ranges from 1 to n, and n is a quantity of sub-paths into which the driving path L is divided; $S_i$ may represent a distance of the sub-path Li, and $v_i$ may represent a driving speed in a uniform driving stage on the sub-pathLi when the vehicle uses the first driving configuration information; $a_{iAcc}$ may represent a maximum acceleration value in an operation mode used in the first driving configuration information; and $a_{iDec}$ may represent a maximum deceleration value in the operation mode used in the first driving configuration information.

Based on this, a feasible solution is provided for calculating duration consumed when the vehicle is automatically driven from the departure place to the destination based on corresponding driving configuration information.

In another possible implementation, when the driving mode selected based on the driving mode selection instruction is the time-saving mode, the selecting a target driving path from at least one driving path of the vehicle from the departure place to the destination based on a driving mode selected based on the driving mode selection instruction may be further implemented in the following manner:

obtaining current remaining energy of the vehicle; determining candidate driving paths from the at least one driving path of the vehicle from the departure place to the destination, where the current remaining energy of the vehicle is not exhausted when the vehicle arrives at the destination from the departure place through the candidate driving path; and selecting, from the candidate driving paths, a driving path through which the vehicle consumes shortest time to arrive at the destination from the departure place as the target driving path.

According to the foregoing solution, with reference to an actual condition of the vehicle, for example, a remaining energy condition of the vehicle, the automated driving system may also plan a driving path to the destination with shortest consumed time and target driving configuration information corresponding to the driving path. Therefore, when the vehicle is automatically driven to the destination through the determined driving path based on the target driving configuration information corresponding to the determined driving path, it can be ensured that remaining energy of the vehicle is sufficient and short time is used.

In another possible implementation, when the driving mode selected based on the driving mode selection instruction is the energy-saving mode, the selecting a target driving path from at least one driving path of the vehicle from the departure place to the destination based on a driving mode selected based on the driving mode selection instruction may be further implemented in the following manner:

obtaining current remaining energy of the vehicle; determining candidate driving paths from the at least one driving path of the vehicle from the departure place to the destination, where the current remaining energy of the vehicle is not exhausted when the vehicle arrives at the destination from the departure place through the candidate driving path; and selecting, from the candidate driving paths, a driving path through which the vehicle consumes minimum energy to arrive at the destination from the departure place before the specified time point as the target driving path.

According to the foregoing solution, with reference to an actual condition of the vehicle, the automated driving system may also plan a driving path through which the vehicle can consume minimum energy to arrive at the destination before the specified time point at which the user expects to arrive at the destination and target driving configuration information corresponding to the driving path. Therefore, when the vehicle is automatically driven to the destination based on the corresponding target driving configuration information through the driving path, it can be ensured that energy of the vehicle is sufficient, less energy is consumed, and the vehicle can arrive at the destination before the specified time point at which the user expects to arrive at the destination.

According to a second aspect, embodiments of this application further provide a driving planning apparatus, including units configured to perform steps in the first aspect, and specifically, may include a presentation unit, a path selection unit, and a driving control unit.

According to a third aspect, embodiments of this application further provide a driving planning device, including at least one processing element and at least one storage element. The at least one storage element is configured to store a program and data. The at least one processing element is configured to invoke and execute the program and data stored in the at least one storage unit, to execute the first aspect or the possible implementation solutions in the first aspect of this application. The processing unit may be implemented based on a processor, and the storage unit may be implemented based on a memory.

According to a fourth aspect, embodiments of this application further provide a computer program. When the computer program is run on a computer, the computer may be enabled to perform the possible methods provided in the first aspect.

According to a fifth aspect, embodiments of this application further provide a computer storage medium. The computer storage medium stores a computer program, and when the computer program is executed by a computer, the computer may be enabled to perform the possible methods provided in the first aspect.

According to a sixth aspect, embodiments of this application further provide a chip. The chip is configured to read a computer program stored in a memory, to perform the possible methods provided in the first aspect. The chip may be coupled to the memory.

According to a seventh aspect, embodiments of this application further provide a chip system. The chip system includes a processor, configured to support a computer apparatus in implementing the possible methods provided in the first aspect. In a possible design, the chip system further includes a memory, and the memory is configured to store a program and data that are necessary for the computer apparatus. The chip system may include a chip, or may include a chip and another discrete component.

According to an eighth aspect, embodiments of this application further provide an automated driving system, including a user interface, a navigation module, an energy storage module, a trajectory tracker, an executor, and the driving planning apparatus in the second aspect or the driving planning device in the third aspect.

For technical effects that may be achieved by the solutions in the second aspect to the eighth aspect, refer to descriptions of the technical effects of the corresponding solutions in the first aspect. Details are not described herein again.

## BRIEF DESCRIPTION OF DRAWINGS

FIG. 1 is a schematic diagram of an automated driving system applicable to an embodiment of this application;
FIG. 2 is a diagram of a structure of an automated driving system applied to an embodiment of this application;
FIG. 3 is a flowchart of a driving planning method according to an embodiment of this application;
FIG. 4 is a processing flowchart of a driving planning method based on a time-saving mode according to an embodiment of this application;
FIG. 5 shows a user interface when a time-saving mode icon is selected according to an embodiment of this application;
FIG. 6 is a schematic diagram of a driving path from a point X to a destination point Y according to an embodiment of this application;
FIG. 7 is a schematic diagram of dividing a driving path 1 in FIG. 6 into three sub-paths;
FIG. 8 is a schematic diagram of speed limits on three sub-paths in FIG. 7;
FIG. 9 is a processing flowchart of a driving planning method based on an energy-saving mode according to an embodiment of this application;
FIG. 10 shows a user interface when an energy-saving mode icon is selected according to an embodiment of this application;
FIG. 11 is a schematic diagram of a structure of a driving planning apparatus according to an embodiment of this application; and
FIG. 12 is a schematic diagram of a structure of a driving planning device according to an embodiment of this application.

## DESCRIPTION OF EMBODIMENTS

With the advent of an autonomous driving technology, intelligent vehicles have become a key research objective of major manufacturers. The autonomous driving technology includes an auxiliary driving technology and an autonomous driving technology. Key technologies implemented by the autonomous driving technology include perception positioning, planning decision, and execution control. The planning decision mainly includes driving planning, path planning, speed planning, and the like. The solution provided in embodiments of this application is to be applied to a planning and decision field in the autonomous driving technology.

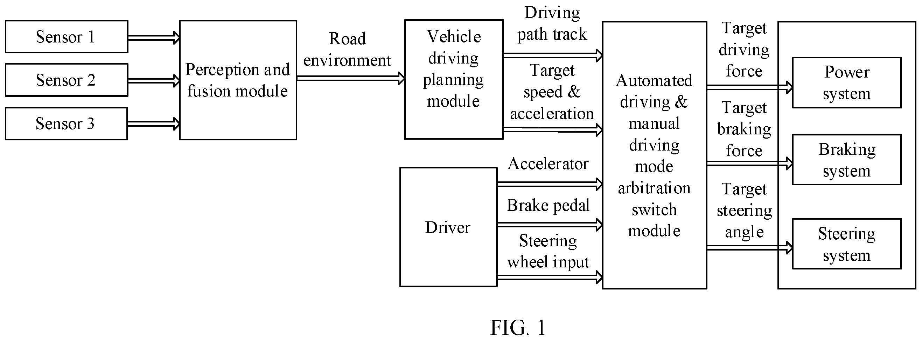

FIG. 1 is a schematic diagram of an automated driving system applicable to an embodiment of this application. It can be learned from the schematic diagram of the system that autonomous driving path planning and efficient path planning functions occupy a core part of the system. It can be learned that path planning and decision play a key role in the autonomous driving technology.

In most of existing path planning and decision solutions, only an energy-saving requirement is simply considered, or only a time-saving requirement is simply considered, and coordination balance between the energy-saving requirement and the time-saving requirement is not fully considered. That is, time saving or energy saving is simply considered in path planning, and an energy remaining condition of a vehicle is not considered at all. As a result, a currently planned path may not meet an objective compatibility between a vehicle driving planning requirement and a user requirement during specific driving.

Based on the foregoing technical problem, embodiments of this application provide a driving planning solution based on autonomous driving. In embodiments of this application, a new driving planning method is proposed for each of a user's time-saving requirement and a user's energy-saving requirement, to determine a most appropriate driving planning solution for a current travel of a user in a user-selected driving mode with reference to a plurality of factors such as a latest arrival time point that can be accepted by the user and remaining energy of a target vehicle.

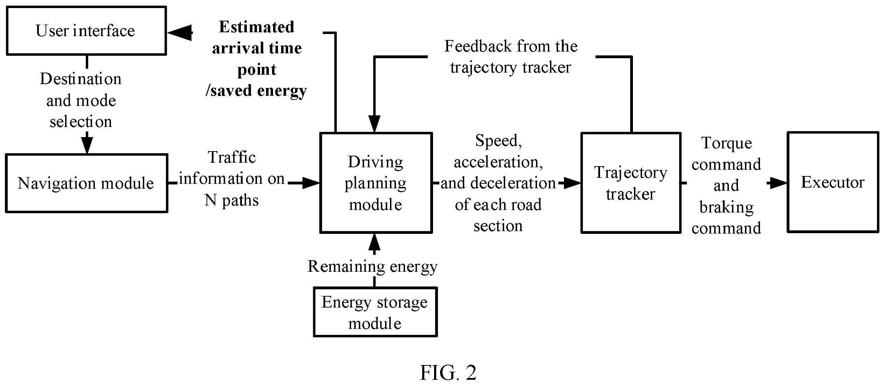

FIG. 2 is a diagram of a structure of an automated driving system applied to an embodiment of this application. The automated driving system includes a user interface, a navigation module, a driving planning module, an energy storage module, a trajectory tracker, and an executor. Specific functions implemented by the modules are specifically as follows:

The user interface is configured to implement information exchange between the automated driving system and a user. For example, when the user needs to travel, the automated driving system pops up an indication in the user interface, to indicate the user to enter a driving destination in the user interface. For another example, after the user sets the driving destination and the driving planning module in the automated driving system determines an optimal driving path, the user interface may display the driving path finally determined by the automated driving system, and display, to the user, estimated consumed time required for an entire travel and estimated energy consumption required for the entire travel. For another example, in a driving process of a vehicle, the automated driving system may update, in the user interface in real time, a current location of the vehicle and a road condition on a driving path, such as a congestion condition, a no-pass condition, and a road repair condition.

The navigation module is configured to: receive the driving destination entered by the user in the user interface; query actual map road topology data; determine, with reference to the destination entered by the user, at least one driving path through which the user can arrive at the destination; and after determining the at least one driving path, submit the at least one driving path to the driving planning module in the automated driving system, so that the driving planning module can select, from the at least one driving path based on a user requirement, a driving path that best meets the user requirement.

The driving planning module is configured to: determine, based on a travel requirement set by the user, a driving path that meets the user requirement from the at least one driving path determined by the navigation module in the automated driving system and driving configuration information corresponding to the driving path, and send a determined driving planning result to the trajectory tracker and the executor, so that the trajectory tracker and the executor complete an entire autonomous driving travel. In embodiments of this application, a capability of the driving planning module herein is mainly improved, so that the improved driving planning module can determine, with reference to an actual condition of the vehicle such as a current remaining energy condition of the vehicle, and a user requirement such as an energy-saving requirement or a time-saving requirement, a driving path that better meets the user requirement from the at least one driving path determined by the navigation module, to plan a more appropriate driving path for the user with reference to the actual condition of the vehicle, and meet increasing usage requirements of the user.

The energy storage module is configured to: monitor current remaining energy of the vehicle in real time, and provide the remaining energy of the vehicle for the driving planning module, so that the driving planning module determines a final driving planning path with reference to the current remaining energy of the vehicle, to avoid a failure of the vehicle to arrive at the destination due to exhaustion of the remaining energy loaded by the vehicle during a driving process.

The trajectory tracker is configured to: generate, based on the driving path and the driving configuration information corresponding to the driving path that are sent by the driving planning module, a torque instruction used to drive the automated driving system and a braking instruction of a braking system, deliver the torque instruction and the braking instruction to corresponding executors for execution, and collect feedback information of the corresponding executors in a process of executing the instructions.

The executor includes a driving system and a braking system, and is configured to control, based on the torque instruction and the braking instruction that are delivered by the trajectory tracker, the vehicle to be driven.

The following uses the diagram of the structure of the automated driving system shown in FIG. 2 as an example to describe a driving planning method provided in embodiments of this application.

The terms "system" and "network" may be used interchangeably in embodiments of this application. "At least one" means one or more, and "a plurality of" means two or more. The term "and/or" describes an association relationship between associated objects and represents that three relationships may exist. For example, A and/or B may represent the following three cases: Only A exists, both A and B exist, and only B exists. A and B may be in a singular or plural form. The character "/" generally indicates an "or" relationship between associated objects. "At least one of the following" or a similar expression thereof indicates any combination of these items, including a single item or any combination of a plurality of items. For example, at least one of a, b, or c may indicate: a, b, c, a and b, a and c, b and c, or a, b, and c, where a, b, and c may be singular or plural.

Unless otherwise status, ordinal numbers such as "first" and "second" mentioned in embodiments of this application are intended to distinguish a plurality of objects, rather than limit an order, a time sequence, priorities, or importance degrees of the plurality of objects.

In addition, the terms "include/comprise" and "have" in embodiments, claims, and accompanying drawings of this application are not exclusive. For example, a process, method, system, product, or device including a series of steps or modules is not limited to the listed steps or modules, and may further include a step or module that is not listed.

The driving planning method provided in embodiments of this application may include: The user may enter a to-be-destined destination in the user interface in FIG. 2. The navigation module queries the actual map road topology data with reference to a current location of the user and a location of the to-be-destined destination entered by the user, to determine the at least one driving path through which the user can arrive at the destination from the current location (a departure place for short below). That is, the at least one driving path described in this application may be provided by the navigation module with reference to the map road topology data and the departure place and the destination of the user. The driving planning module or a processing chip in the driving planning module may present a time-saving driving mode icon, an energy-saving driving mode icon, and the like in the user interface.

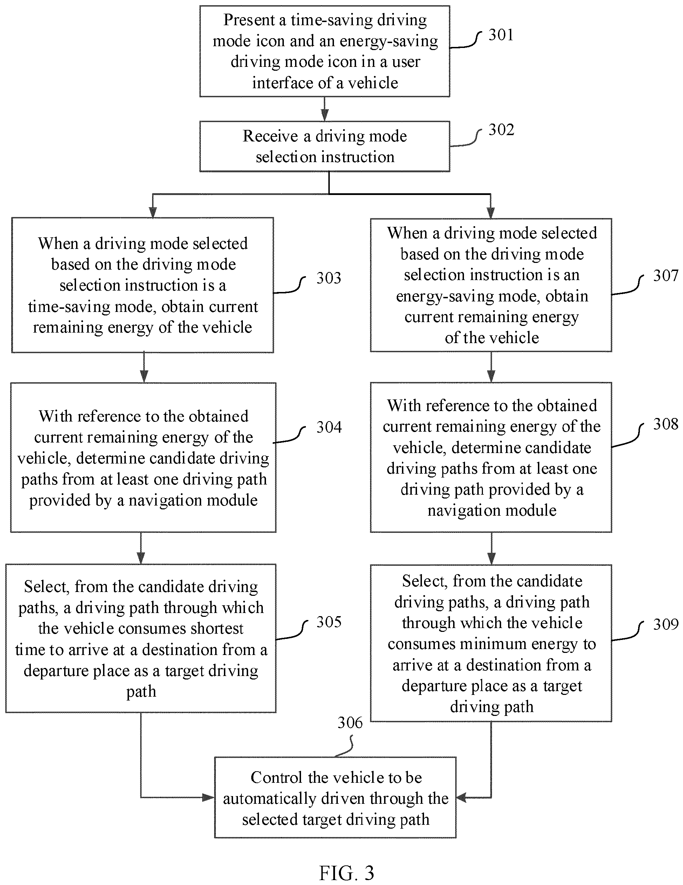

Based on an example applied to the automated driving system shown in FIG. 2, implementation of the driving planning method provided in embodiments of this application may include the following process. For details, refer to FIG. 3.

Step 301: The driving planning module presents a time-saving driving mode icon and an energy-saving driving mode icon in a user interface of a vehicle. The time-saving driving mode icon may indicate a time-saving mode in driving modes. The energy-saving driving mode icon may indicate an energy-saving mode in the driving modes. When the vehicle is driven in the time-saving mode, remaining energy of the vehicle can ensure that the vehicle consumes shortest time to arrive at a destination from a departure place. When the vehicle is driven in the energy-saving mode, remaining energy of the vehicle can ensure that the vehicle consumes minimum energy to arrive at the destination from the departure place before a specified time point. The specified time point may be information about a specified time point that is entered by a user in the user interface to arrive at the destination.

Step 302: The driving planning module receives a driving mode selection instruction, where the driving mode selection instruction may be delivered to the driving planning module by tapping the time-saving driving mode icon in the user interface or tapping the energy-saving driving mode icon in the user interface.

Step 303: When the time-saving driving mode icon presented in the user interface is selected, that is, when the driving mode selected based on the driving mode selection instruction is the time-saving mode, the driving planning module may first obtain current remaining energy of the vehicle.

Step 304: The driving planning module may first determine, with reference to the obtained current remaining energy of the vehicle, candidate driving paths from at least one driving path that is of the vehicle from the departure place to the destination and that is provided by the navigation module. The current remaining energy of the vehicle is not exhausted when the vehicle arrives at the destination from the departure place through the candidate driving path.

Step 305: The driving planning module may select, from the candidate driving paths, a driving path through which the vehicle consumes shortest time to arrive at the destination from the departure place as the target driving path.

Step 306: The driving planning module controls the vehicle to be automatically driven through the target driving path selected in step 305. In this way, when the driving mode selected based on the driving mode selection instruction is the time-saving mode, the driving planning module may control the vehicle to be automatically driven to the destination through the target driving path, so that the driving planning module can plan a driving path with short consumed time for the user with reference to an actual condition of the vehicle, to better meet a user requirement.

Step 307: When the energy-saving driving mode icon presented in the user interface is selected, that is, when the driving mode selected based on the driving mode selection instruction is the energy-saving mode, the driving planning module may first obtain current remaining energy of the vehicle.

Step 308: The driving planning module may first determine, with reference to the obtained current remaining energy of the vehicle, candidate driving paths from at least one driving path that is of the vehicle from the departure place to the destination and that is provided by the navigation module. The current remaining energy of the vehicle is not exhausted when the vehicle arrives at the destination from the departure place through the candidate driving path.

Step 309: The driving planning module may select, from the candidate driving paths, a driving path through which the vehicle consumes minimum energy to arrive at the destination from the departure place before the specified time point as the target driving path. The specified time point may be information about a specified time point that is entered by the user in the user interface to arrive at the destination. After step 309 is performed, step 306 above may be performed. A difference is that herein, the driving planning module controls the vehicle to be automatically driven through the target driving path selected in step 309. In this way, when the driving mode selected based on the driving mode selection instruction is the energy-saving mode, the driving planning module may control the vehicle to be automatically driven to the destination through the target driving path, so that the driving planning module can plan a driving path with less energy consumption for the user with reference to an actual condition of the vehicle, to better meet a user requirement.

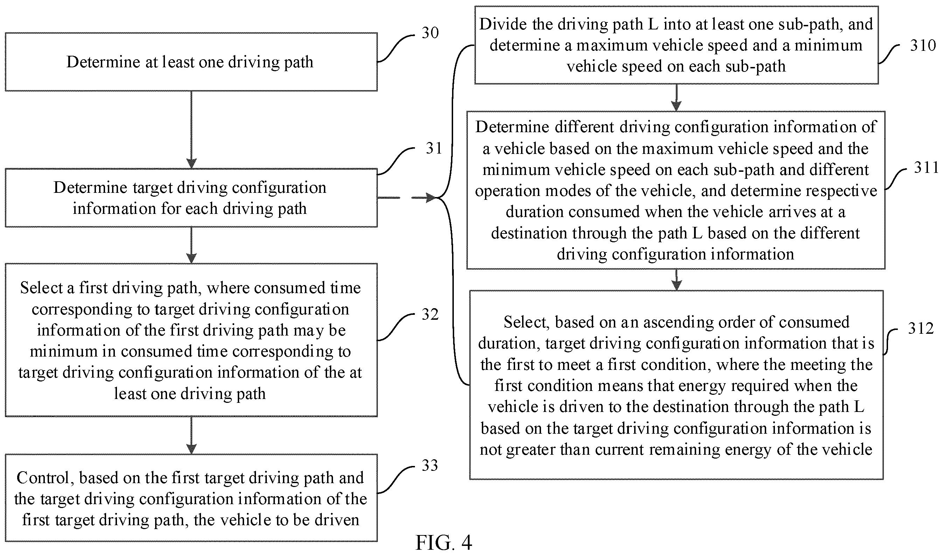

Next, a path planning solution based on the time-saving mode with reference to a current remaining energy condition of the vehicle is provided. It may be understood that, embodiments of this application provide a path planning solution that comprehensively considers a time factor and a current energy condition of the vehicle. FIG. 4 is a processing flowchart of a driving planning method according to an embodiment of this application. The method may be performed by the driving planning module in the automated driving system in FIG. 2, or may be performed by a chip in the driving planning module. The following processing processes are included:

First, the driving planning module may perform step 301 to step 303 in FIG. 3. Details are not described herein again. For details, refer to the foregoing description in FIG. 3. After step 303 is performed, the following steps start to be performed:

Step 30: The driving planning module determines at least one driving path of the vehicle from the departure place to the destination. The at least one driving path may be obtained through calculation by the navigation module in the automated driving system in FIG. 2 based on information about the destination entered by the user in the user interface and with reference to the map road topology information.

Step 31: The driving planning module performs the following processing on each of the at least one driving path, to obtain target driving configuration information corresponding to each driving path.

For example, a driving path L is used as an example, and the driving path L may be any one of the at least one driving path. The following process provides a process of obtaining the target driving configuration information corresponding to the driving path L. The process specifically includes:

Step 310: The driving planning module divides the driving path L into at least one sub-path, and determines a maximum vehicle speed and a minimum vehicle speed on each sub-path. The maximum vehicle speed may be determined based on a road type-based speed limit, a weather type-based speed limit, and a congestion condition-based speed limit on the corresponding sub-path. The minimum vehicle speed may be a preset uniform driving vehicle speed at which the vehicle is most energy-saving.

Step 311: The driving planning module determines different driving configuration information of the vehicle on the driving path L based on the maximum vehicle speed and the minimum vehicle speed on each sub-path and different operation modes of the vehicle, and determines respective duration consumed when the vehicle arrives at the destination from the departure place through the driving path L based on the different driving configuration information.

Step 312: The driving planning module may obtain current remaining energy of the vehicle, and select, based on an ascending order of consumed duration from the different driving configuration information determined in step 311, target driving configuration information that is the first to meet a first condition. The meeting the first condition may mean that energy required when the vehicle arrives at the destination from the departure place through the driving path L based on the target driving configuration information is less than the current remaining energy of the vehicle. It should be understood that the different driving configuration information may be first sorted in an ascending order of consumed duration, and then the target driving configuration information that is the first to meet the first condition is selected from the sorted different driving configuration information. The target driving configuration information may be found from the different driving configuration information more quickly, to improve efficiency of path planning.

Specifically, when processing in step 310 to step 312 is performed on each of the at least one driving path, target driving configuration information corresponding to each driving path may be determined.

Step 32: The driving planning module selects a first driving path from the at least one driving path as a target driving path. The first driving path may be a driving path that corresponds to shortest consumed duration in target driving configuration information corresponding to the at least one driving path.

Step 33: The driving planning module delivers instructions to the trajectory tracker and the executor based on the first driving path and target driving configuration information corresponding to the first driving path, to control the vehicle to be automatically driven to the destination through the first driving path. Therefore, the driving planning module can plan a driving path with short consumed duration with reference to an actual condition of the vehicle, to better meet a user requirement.

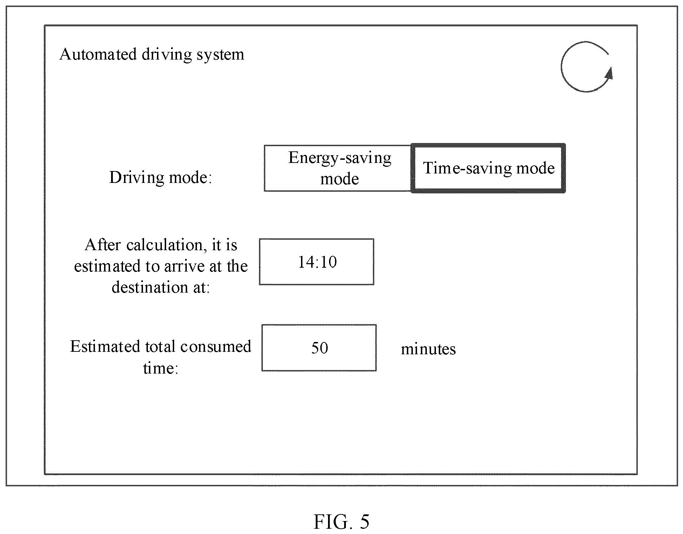

With reference to a specific example, the following describes in detail the path planning method based on the time-saving mode in the foregoing embodiment of this application shown in FIG. 4. After the user starts an automatic vehicle and enters a destination in the user interface, the driving planning module may obtain remaining energy of the vehicle from the energy storage module. The navigation module may obtain N driving paths to the destination based on prestored road topology information, and prompt the user to select a corresponding driving mode in the user interface. In a user interface shown in FIG. 5, an example in which driving modes include the time-saving mode and the energy-saving mode is used for description. The user may select a time-saving mode icon. After the time-saving mode icon is selected, the driving planning module may select a target driving path that is most time-saving in the N driving paths on the basis that the remaining energy of the vehicle can ensure that the vehicle arrives at the destination, and provide target driving configuration information for arriving at the destination through the target driving path. In this way, the executor may control a braking system and a driving system of the vehicle based on the target driving path and the target driving configuration information that are provided by the driving planning module.

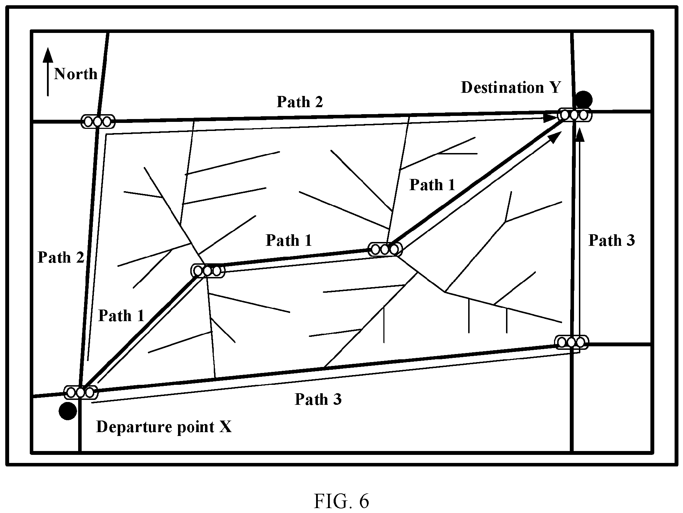

For example, as shown in FIG. 6, the user needs to arrive at a destination point Y from a point X. During specific implementation, a destination input window is first displayed in the user interface of the automated driving system, and the user is prompted to enter a destination of a current travel. The automated driving system may prompt, through broadcast via a speaker or the like, the user to enter the destination of the travel. After the user successfully enters the destination of the travel in the user interface, the navigation module in the automated driving system obtains the destination entered by the user, and plans at least one driving path from a current location of the user to the destination based on the current location of the user and a location of the obtained destination and with reference to actual road topology information. For example, refer to FIG. 6. After the user enters the destination of the travel, the navigation module in the automated driving system may plan three driving paths to the destination Y based on the current location (namely, the departure point X) of the user and the location (namely, the destination Y) of the obtained destination and with reference to the actual road topology information. It is assumed that the three driving paths are a path 1, a path 2, and a path 3.

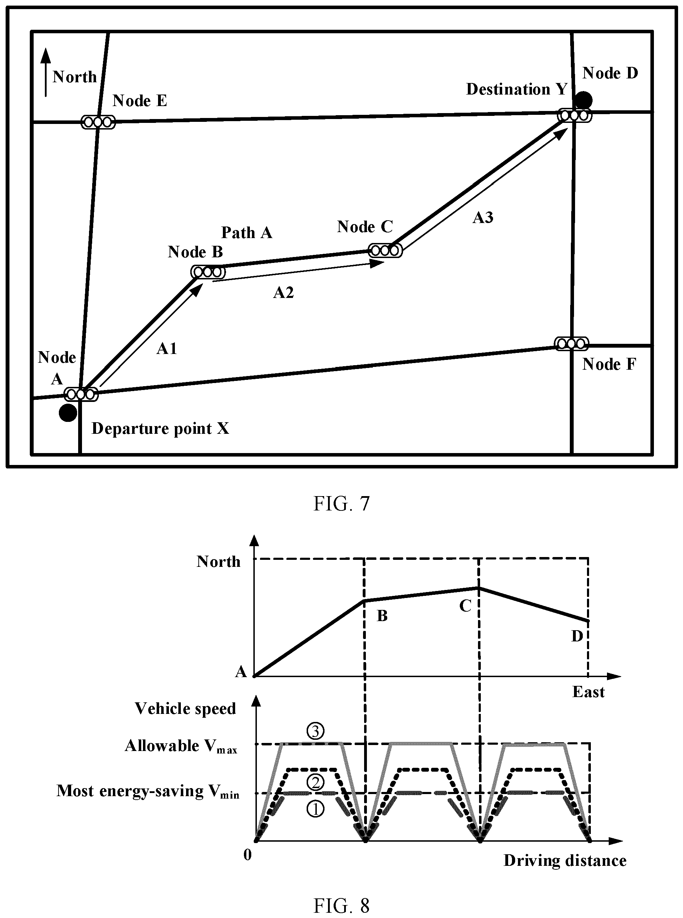

Herein, the path 1 is used as an example for description. Processing processes on the path 2 and the path 3 are similar to that on the path 1, and details are not described. A processing process on the path 1 may be as follows: Step 1: The navigation module divides the path 1 into M sub-paths, for example, three sub-paths: an AB segment, a BC segment, and a CD segment. Specifically, refer to FIG. 7. The navigation module in the automated driving system queries the road topology information based on the destination entered by the user, and may segment the path 1 by using traffic lights as nodes, to obtain a plurality of sub-paths. Refer to FIG. 7. The path 1 includes two traffic lights. Therefore, the path 1 may be divided into three segments by using the two traffic lights as segmentation points. The three segments are the AB segment (which may be referred to as a sub-path A1), the BC segment (which may be referred to as a sub-path A2), and the CD segment (which may be referred to as a sub-path A3).

In an alternative solution, the automated driving system may also preset a unit length of each sub-path during segmentation of the driving path, and directly perform equal segmentation on a determined driving path based on the preset unit length of a sub-path during subsequent driving path planning, to segment each driving path into at least one sub-path.

Step 2: The driving planning module determines a maximum vehicle speed on each of the M sub-paths.

Specifically, after determining the plurality of sub-paths of the driving path, the driving planning module in the automated driving system may determine the maximum vehicle speed on each sub-path based on a road type of each sub-path and current weather and traffic flow data of each sub-path.

Influence factors of the maximum vehicle speed of the vehicle on each sub-path include but are not limited to a weather condition, a traffic congestion condition, a road type, and the like. For example, for one sub-path, when a road type of the sub-path is an expressway, a maximum driving speed on the sub-path may be 120 km/h. When a road type of the sub-path is a trunk road, a maximum driving speed on the sub-path may be 80 km/h. When a road type of the sub-path is a secondary trunk road, a maximum driving speed on the sub-path may be 60 km/h. When a road type of the sub-path is a branch road, a maximum driving speed on the sub-path may be 40 km/h. In this way, maximum driving speeds of the vehicle on the sub-paths may be determined based on different road types of the sub-paths, to avoid speeding. Herein, a maximum driving speed determined based on a road type of a sub-path may be defined as $V_{\text{road-based speed limit}}$.

It should be noted that the maximum driving speed that is on the sub-path and that is determined based on the road type of the sub-path is in an ideal state, and the maximum driving speed is a maximum driving speed that is on a road of the road type and that is stipulated by the state. However, in practice, when the vehicle is driven on a sub-path, a maximum driving speed that can be reached when the vehicle is driven on the sub-path may also be affected by the weather condition and the traffic congestion condition. In this way, the maximum driving speed determined based on the road type is used as a maximum speed limit, and a maximum driving speed that can be reached when the vehicle is driven on the sub-path is further limited by another collected factor that affects a driving speed of the vehicle.

For example, if a road type of a sub-path is a trunk road, it may be determined that a maximum speed limit on the sub-path is 80 km/h, and it is stipulated that when a weather condition on a path whose road type is a trunk road is fog, rain, snow, dust, or hail, and the visibility is less than 50 meters, a driving speed of a vehicle cannot exceed 30 km/h. In this way, in a degree, driving safety of the user can be improved by decreasing a vehicle speed in extreme weather. Herein, a maximum driving speed determined based on a weather condition on a sub-path may be defined as $V_{\text{weather-based speed limit}}$.

For another example, a daily road traffic condition on each road changes continuously. More vehicles on a road indicate more congested traffic, and also a smaller maximum driving speed that can be reached during driving on the road. That is, when a road traffic condition on a sub-path changes, a maximum driving speed that can be reached when the vehicle is driven on the sub-path also changes accordingly.

During specific implementation, when a maximum driving speed at which the vehicle is driven at on a road section with different road traffic conditions is to be determined, the road traffic conditions on the road section and driving speeds of the vehicle corresponding to the road traffic conditions in a period of time may be first collected. Then machine learning is performed based on the collected road traffic conditions on the road section and the driving speeds of the vehicle corresponding to the road traffic conditions, to obtain a correspondence between the road traffic conditions and the driving speeds of the vehicle corresponding to the road traffic conditions.

In this way, when determining a maximum driving speed on a sub-path, the driving planning module in the automated driving system determines, based on a traffic congestion condition that is on the sub-path and that is collected by the navigation module in the automated driving system and with reference to the determined correspondence between the road traffic condition on the sub-path and a driving speed of the vehicle on the sub-path corresponding to the road traffic condition, a maximum driving speed that can be reached when the vehicle is driven on the sub-path in the traffic congestion condition on the sub-path. Herein, a maximum driving speed determined based on a traffic congestion condition on a sub-path may be defined as $V_{congestion-based\ speed\ limit}$.

For example, if a road type of a sub-path is a trunk road, it may be determined that a maximum speed limit on the sub-path is 80 km/h. In addition, when a road traffic condition on the sub-path is smooth, it may be set that a maximum speed limit on the sub-path in this condition is a maximum speed limit specified in related road traffic regulations. For example, when a road traffic condition on the sub-path is relatively congested, it may be set that a maximum speed on the sub-path in this condition is half of the maximum driving speed of the target vehicle determined based on the road type, namely, 40 km/h. For example, when the road traffic condition on the sub-path is seriously congested, it may be set that a maximum speed on the sub-path in this condition is 10 km/h.

In this way, when performing driving planning, the driving planning module in the automated driving system may comprehensively consider factors such as a road type of a sub-path, a weather condition on the sub-path, and traffic congestion on the sub-path, to reduce differences between calculated time and energy that are consumed for driving the vehicle on the sub-path and time and energy that are consumed for actually driving. Therefore, a driving planning solution planned by the driving planning module in the automated driving system is more accurate.

According to the foregoing description, a maximum vehicle speed on each sub-path may be determined based on a maximum speed $V_{max}=min\ \{V_{road-based\ speed\ limit},\ V_{weather-based\ speed\ limit},\ V_{congestion-based\ speed\ limit}\}$. That is, the maximum vehicle speed on each sub-path may be a minimum value in the road-based speed limit, the weather-based speed limit, and the congestion-based speed limit that are predetermined on the sub-path.

Furthermore, in addition to the maximum vehicle speed limit, there is a minimum vehicle speed limit for each sub-path. That is, a minimum driving speed value of the vehicle on each sub-path is also limited. A most energy-saving driving speed of the vehicle on each type of road may be obtained by a vehicle road test, and is predetermined and stored in the driving planning module of the vehicle. Based on this, the driving speed may be used as the minimum driving speed value of the vehicle on each sub-path for limitation. That is, the driving speed is predetermined and stored in the driving planning module of the vehicle. Herein, the minimum driving speed value of the vehicle on each sub-path is defined as $V_{min}$. A maximum vehicle speed and a minimum vehicle speed on the sub-path AB/BC/CD on the path 1 in the foregoing example may be shown in FIG. 7. Allowable $V_{max}$ is a minimum value determined from $V_{road-based\ speed\ limit}$, $V_{weather-based\ speed\ limit}$, and $V_{congestion-based}$ speed limit on a Corresponding Sub-path, and most energy-saving $V_{min}$ is a prestored uniform driving vehicle speed at which the vehicle is most energy-saving. When the vehicle is driven on each sub-path, a driving speed usually changes between $V_{max}$ and $V_{min}$.

Step 3: The driving planning module calculates driving configuration information of the path 1.

Specifically, the driving planning module may combine different vehicle speed configurations on each of the M sub-paths with different operation modes based on maximum vehicle speeds on the M sub-paths and the different operation modes of the vehicle, to obtain different driving configuration information. The driving planning module may measure duration consumed when the vehicle is automatically driven from the departure place to the destination through the path 1 in various driving configuration information.

First, three existing operation modes of most vehicles are described, which are sport, normal, and eco. Certainly, with development of vehicle technologies, more other possible operation modes may be developed, which are not limited in this application. The vehicle in the three operation modes has different acceleration and deceleration/braking levels. For example, in the sport mode, the vehicle has fastest acceleration and deceleration. That is, time used for acceleration and deceleration is short. The vehicle can accelerate or decelerate quickly. However, the vehicle consumes most energy in this mode. In the normal mode, the vehicle has acceleration and deceleration less than those in the sport mode. In the eco mode, the vehicle has low acceleration and deceleration, and the eco mode is a mode with lowest acceleration and deceleration in the three modes. In this mode, time used by the vehicle for acceleration and deceleration is short, but the vehicle may save energy in the eco mode.

It is assumed that different configured vehicle speeds on the three sub-paths AB/BC/CD on the path 1 in the foregoing example description are combined with different operation modes, to obtain a driving configuration information table formed by different driving configuration information. Details may be shown in Table 1:

**Table 1**

| Parameter | Speed allocation | Operation mode (acceleration/braking level) | Consumed duration |
|---|---|---|---|
| Driving configuration information i-1 | $V_{max}$ is configured on AB, BC, and CD | Sport | T1 |
| Driving configuration information i-2 | $V_{max}$ is configured on AB, BC, and CD | Normal | T2 |
| Driving configuration information i-3 | $V_{max}$ is configured on AB, BC, and CD | Economic | T3 |
| Driving configuration information i-4 | A vehicle speed on the road section AB is decreased by $\Delta V$, and vehicle speeds on the road sections BC and CD remain unchanged | Sport | T4 |
| Driving configuration information i-5 | A vehicle speed on the road section AB is decreased by $\Delta V$, and vehicle speeds on the road sections BC and CD remain unchanged | Normal | T5 |
| Driving configuration information i-6 | A vehicle speed on the road section AB is decreased by $\Delta V$, and vehicle speeds on the road sections BC and CD remain unchanged | Economic | T6 |
| ... | ... | ... | |
| Driving configuration information i-N | Vehicle speeds on the road sections AB and BC are decreased by $\Delta V$, and a vehicle speed on the road section CD remains unchanged | Sport | T7 |
| Driving configuration information i-N+1 | Vehicle speeds on the road sections AB and BC are decreased by $\Delta V$, and a vehicle speed on the road section CD remains unchanged | Normal | T8 |
| Driving configuration information i-N+2 | Vehicle speeds on the road sections AB and BC are decreased by $\Delta V$, and a vehicle speed on the road section CD remains unchanged | Economic | T9 |
| ... | ... | ... | |
| Driving configuration information i-M | Vehicle speeds on the road sections AB, BC, and CD are decreased to $V_{min}$ | Sport | T10 |
| Driving configuration information i-M+1 | Vehicle speeds on the road sections AB, BC, and CD are decreased to $V_{min}$ | Normal | T11 |
| Driving configuration information i-M+2 | Vehicle speeds on the road sections AB, BC, and CD are decreased to $V_{min}$ | Economic | T12 |

A row in Table 1 represents one piece of driving configuration information. Explanation for Table 1 is as follows: For example, in the driving configuration information i-1, driving at allowable $V_{max}$ shown in FIG. 7 is performed on all the three sub-paths AB, BC, and CD on the path 1, and the sport mode is selected for the operation mode. In this configuration, consumed duration required by the vehicle to arrive at the destination is T1. The consumed duration T1 may meet the following formula 1:

$$T = \sum_{i=AB,BC,CD} \frac{S_i}{v_i} + \frac{v_i}{2a_{iAcc}} + \frac{v_i}{2a_{iDec}}.$$

In the foregoing formula, T represents duration consumed when the vehicle arrives at the destination from the departure place through the path 1 based on the driving configuration information i-1; i represents a sub-path identifier of each sub-path Li in the at least one sub-path AB, BC, and CD, and i ranges from 1 to n, and n is a quantity of sub-paths into which the driving path is divided. Herein, n is 3, an identifier of the sub-path AB may be A1, an identifier of the sub-path BC may be A2, and an identifier of the sub-path CD may be A3. $S_i$ represents a distance of the path 1. $v_i$ represents a driving speed on the sub-path Li in a uniform driving stage when the vehicle uses the driving configuration information i-1. $a_{iAcc}$ represents a maximum acceleration value in an operation mode (namely, the sport mode herein) used in the driving configuration information i-1. $a_{iDec}$ represents a maximum deceleration value in the operation mode (namely, the sport mode herein) used in the driving configuration information i-1. For example, the maximum acceleration value and the minimum acceleration value $a_{iAcc}/a_{iDec}$ that are in the sport mode may be preset and stored in the driving planning module.

By analogy, explanation for the driving configuration information i-2 and the driving configuration information i-3 is similar to that for the driving configuration information i-1. Differences are that in the driving configuration information i-2, $a_{iAcc}/a_{iDec}$ respectively represent a maximum acceleration value and a maximum deceleration value in the normal mode; and in the driving configuration information i-3, $a_{iAcc}/a_{iDec}$ respectively represent a maximum acceleration value and a maximum deceleration value in the economic mode. The maximum acceleration values and the maximum deceleration values $a_{iAcc}/a_{iDec}$ in the normal mode and the economic mode may be preset and stored in the driving planning module.

In the driving configuration information i-4, the vehicle speed on the road section AB is decreased by $\Delta V$ from allowable $V_{max}$. The vehicle speeds on the sections BC and CD remain unchanged, that is, remain in allowable $V_{max}$. The sport mode is selected for the operation mode. Consumed duration required when the vehicle arrives at the destination Y from the departure place X based on the driving configuration information i-4 may be calculated as T4 according to the foregoing formula 1. In a calculation process, $v_i$ corresponding to the road section AB is a value obtained after allowable $V_{max}$ is decreased by $\Delta V$, and $v_i$ corresponding to the road sections BC and CD is allowable $V_{max}$. $\Delta V$ may be a preset minimum speed adjustment step value, for example, may be set to 1 km/h. By analogy, in the driving configuration information i-5 and the driving configuration information i-6, consumed duration required when the vehicle arrives at the destination Y from the departure place X may be calculated as T5 and T6.

In the driving configuration information i-N, the vehicle speeds on the road sections AB and BC each are decreased by $\Delta V$ from allowable $V_{max}$. The vehicle speed on the road section CD remains unchanged, that is, remains in allowable $V_{max}$. The sport mode is selected for the operation mode. Consumed duration required when the vehicle arrives at the destination Y from the departure place X based on the driving configuration information i-N may be calculated as T7 according to the foregoing formula 1. In a calculation process, $v_i$ corresponding to each of the road sections AB and BC is a value obtained after allowable $V_{max}$ is decreased by $\Delta V$, and $v_i$ corresponding to the road section CD is allowable $V_{max}$. By analogy, in the driving configuration information i-N+1 and the driving configuration information i-N+2, consumed duration required when the vehicle arrives at the destination Y from the departure place X may be calculated as T8 and T9.

In the driving configuration information i-M, the vehicle speeds on the road sections AB, BC, and CD are decreased to $V_{min}$. That is, the driving speeds on the three sub-paths are all adjusted to a minimum allowable speed that is the most energy-saving, namely, the prestored uniform driving vehicle speed $V_{min}$ at which the vehicle is most energy-saving. Consumed duration required when the vehicle arrives at the destination Y from the departure place X based on the driving configuration information i-M may be calculated as T10 according to the foregoing formula 1. In a calculation process, $v_i$ corresponding to each of the road sections AB, BC, and CD is a value of allowable $V_{min}$. By analogy, in the driving configuration information i-M+1 and the driving configuration information i-M+2, consumed duration required when the vehicle arrives at the destination Y from the departure place X may be calculated as T11 and T12.

Step 4: The driving planning module determines, based on the different driving configuration information of the path 1 in Table 1, target driving configuration information 1 in which short duration is consumed and current remaining energy of the vehicle ensures that the vehicle can arrive at the destination Y from the departure place X.

It may be learned from the configuration table 1 that, in the configuration items, the speed on each sub-path is continuously decreased. Therefore, it may be learned that values of consumed duration corresponding to T1 ... T12 in the rightmost column in the columns should be sorted in ascending order. To be specific, the vehicle consumes shortest time (namely, T1) to automatically drive from the departure place X to the destination Y based on the driving configuration information (namely, the driving configuration information i-1) in the first row, and consumes longest time (namely, T12) to automatically drive from the departure place X to the destination Y based on the driving configuration information (namely, the driving configuration information i-M+2) in the last row. The vehicle consumes shortest time to automatically drive to the destination Y based on the driving configuration information i-1 in the first row, but may consume most energy. Therefore, a current condition of the vehicle is further considered, for example, whether the current remaining energy of the vehicle is sufficient to support the vehicle in consuming shortest time to automatically arrive at the destination Y based on the driving configuration information i-1. Based on this analysis, in this embodiment of this application, configuration information needs to be selected from the driving configuration information with shortest consumed duration to the driving configuration information with longest consumed duration in Table 1, to find the target driving configuration information in which short duration is consumed and the current remaining energy of the vehicle ensures that the vehicle can arrive at the destination.

For example, starting from the driving configuration information i-1 in Table 1, total energy consumption required when the vehicle arrives at the destination Y from the departure place X based on the driving configuration information i-1 is pre-calculated, to determine whether the total energy consumption required by the vehicle is not greater than the current remaining energy of the vehicle. If yes, the driving configuration information i-1 is the selected driving configuration information in which short duration is consumed and the current remaining energy of the vehicle ensures that the vehicle can arrive at the destination Y. If no, total energy consumption required when the vehicle arrives at the destination Y from the departure place X based on the driving configuration information i-2 is pre-calculated, to determine whether the total energy consumption required by the vehicle is not greater than the current remaining energy of the vehicle. If yes, the driving configuration information i-2 is the selected driving configuration information in which short duration is consumed and the current remaining energy of the vehicle ensures that the vehicle can arrive at the destination Y. If no, total energy consumption required when the vehicle arrives at the destination Y from the departure place X based on the driving configuration information i-3 is pre-calculated. By analogy, driving configuration information in which short duration is consumed and the current remaining energy of the vehicle ensures that the vehicle can arrive at the destination Y is found and is used as the target driving configuration information used by the vehicle to arrive at the destination Y from the departure place X through the path 1.

It should be understood that the current remaining energy of the vehicle may be obtained by the driving planning module from the energy storage module. As described in FIG. 2, the energy storage module stores the current remaining energy of the vehicle, for example, stores current remaining power information of the vehicle, for example, 1000 degrees, and may further store information about reference mileage supported by the current remaining energy of the vehicle and the like.

Certainly, when the vehicle arrives at the destination, to avoid inconvenience caused to the user because energy exhaustion prevents the vehicle from arriving at an energy supplemental station (such as a gas station or a charging station), in the foregoing determining process, after total energy consumption required when the vehicle arrives at the destination Y based on one piece of driving configuration information is calculated each time, values of the total energy consumption and a difference between the current remaining energy of the vehicle and a first reserved value may be specifically determined. The first reserved value is usually a value of energy consumption required when the vehicle arrives at an energy supplemental station near the destination Y from the destination Y.

Specifically, the driving planning module may view distribution of energy supplemental stations around the destination Y with reference to information about the destination Y entered by the user and based on the map road topology information, then select an energy supplemental station around the destination Y, for example, select an energy supplemental station nearest to the destination Y, and then estimate energy required when the vehicle arrives at the selected energy supplemental station from the destination Y, to determine the first reserved value.

In addition, when calculating energy consumption of the vehicle from the departure point to the destination based on one piece of driving configuration information, the driving planning module may calculate, according to a vehicle instantaneous energy consumption calculation model, total energy consumption required when the vehicle is driven on each sub-path based on the driving configuration information. The vehicle instantaneous energy consumption calculation model calculates energy consumption based on a speed time sequence of a running state of an electric vehicle on the basis of dynamics analysis of the vehicle. For example, the vehicle instantaneous energy consumption calculation model may meet the following formula:

$$F = mgf + mgi + \delta m \frac{dv}{dt} + \frac{\rho C_D A}{2} v^2.$$

In the formula, m is a curb weight of the vehicle, and is in a unit of kg. $f$ is a rolling resistance coefficient. $i$ is a road gradient, and is usually zero because an urban road gradient changes slightly. $\delta$ is a correction coefficient of rotating mass. $\rho$ is air density, and is usually $\rho$ = 1.2258kg/m³. $C_D$ is an air drag coefficient. A is a frontal area of the vehicle, $v$ is a vehicle speed, and is in a unit of m/s.

For example, the path 1 is used as an example for description. Refer to FIG. 5 and FIG. 7. When the vehicle is driven on the three sub-paths AB, BC, and CD on the path 1, the vehicle is first in uniformly accelerated motion, then in uniform motion, and finally in uniformly decelerated motion. Because a direction of driving force on the vehicle in acceleration and the uniform motion is inconsistent with a direction of braking force on the vehicle in deceleration motion, energy consumed when the vehicle is driven on the three sub-paths AB, BC, and CD on the path 1 needs to be separately calculated according to the vehicle instantaneous energy consumption calculation model.

An example in which the vehicle is driven on the sub-path AB (the sub-path A1) is used for description. The vehicle is driven at a uniform speed or accelerates on the sub-path A1 from a moment 0 to a moment $t1$, and decelerates on the sub-path A1 from a moment t1 to a moment t2. When the vehicle is driven at a uniform speed or in an accelerated driving state, impact of a gradient i ignored, and driving force on the vehicle is:

$$F_t = mgf + \delta m \frac{dv}{dt} + \frac{\rho C_D A}{2} v^2.$$

In this case, energy consumed by driving when the vehicle is driven on the sub-path A1 is $E_t = \sum_{t=0}^{t1} \frac{1}{3600} \times \frac{F_t v}{1000} \Delta t$.

When the vehicle is in a decelerated driving state, braking force on the vehicle is:

$$F_b = mgf + \delta m \frac{dv}{dt} + \frac{\rho C_D A}{2} v^2.$$

In the formula, $F_b$ is road rolling resistance.

In this case, energy consumed by braking when the vehicle is driven on the sub-path A1 may be $E_b = \sum_{t=t1}^{t2} \frac{1}{3600} \times \frac{F_b v}{1000} \Delta t$.

Further, there may be friction between internal components of the vehicle. In a vehicle driving process, specific energy needs to be consumed for external work to overcome the friction. Therefore, it may be set that when the vehicle is driven on the sub-path A1, power consumption consumed by the vehicle to overcome internal friction is $P_a$, and total energy consumption consumed by the vehicle to drive on the sub-path A1 when the vehicle overcomes the internal friction may be $E_a = \sum_{t=0}^{t2} \frac{1}{3600} P_a \Delta t$.

In conclusion, total energy consumption of the vehicle to drive on the sub-path A1 is $E_{talA1} = \frac{E_t}{\eta_m \eta} - E_b \eta_b + E_a$.

In the formula, $\eta_m$ is mechanical transmission efficiency of a transmission system of an electric vehicle. $\eta$ is electric efficiency, and may be obtained by interpolation according to an efficiency MAP diagram. $\eta_b$ is braking energy recovery efficiency of the electric vehicle.

By analogy, total energy consumption of the vehicle to drive on the sub-path A2 may be calculated as $E_{talA2}$, and total energy consumption of the vehicle to drive on the sub-path A3 is calculated as $E_{talA3}$. In this way, total energy consumption of the vehicle to drive on the path 1 is $E_{tal} = E_{talA1} + E_{talA2} + E_{talA3}$.

Step 5: According to the same processing manner in step 1 to step 4, the driving planning module determines target driving configuration information 2 in which short duration is consumed and current remaining energy of the vehicle ensures that the vehicle can arrive at the destination Y and that is of the path 2, and determines target driving configuration information 3 in which short duration is consumed and current remaining energy of the vehicle ensures that the vehicle can arrive at the destination Y and that is of the path 3. Assuming that a value T in the target driving configuration information 1 is 60 minutes, a value T in the target driving configuration information 2 is 70 minutes, and a value T in the target driving configuration information 3 is 55 minutes, the vehicle may be controlled to automatically arrive at the destination Y from the departure place X through the path 3 based on the target driving configuration information 3 selected for the path 3.

Then, the driving planning module may send information about a selected target path such as information about the path 3, and the target driving configuration information of the path 3, to the trajectory tracker. The trajectory tracker sends a corresponding driving instruction to the executor based on the path 3 and the target driving configuration information of the path 3, so that when the vehicle automatically arrives at the destination from the departure place, short time is consumed and remaining energy of the vehicle can ensure that the vehicle arrives at the destination.

In addition, the driving planning module may further calculate, based on the selected target driving path and the target driving configuration information, an estimated time point at which the vehicle arrives at the destination, and display the estimated time point obtained by calculation in a user interface shown in FIG. 5. As shown in FIG. 5, "After calculation, it is estimated to arrive at the destination at 14:10" may be displayed, to improve user experience.

It can be learned that, according to the foregoing driving planning solution based on the time-saving mode, when the user selects the time-saving mode icon in the user interface, the driving planning module may calculate a fastest driving path to the destination within a driving distance allowed by remaining energy based on the current remaining energy condition of the vehicle, and present information about estimated time point of arrival at the destination to the user via the user interface. Therefore, a more feasible driving planning solution is provided based on the actual condition of the vehicle, to improve user experience.

The following uses the diagram of the structure of the automated driving system shown in FIG. 2 as an example to describe a second driving planning method provided in embodiments of this application. The driving planning method is based on the energy-saving mode, and a path planning solution that considers a time factor and a current energy condition factor of the vehicle is comprehensively provided based on a latest arrival time point that can be accepted by the user and a current remaining energy condition of the vehicle.

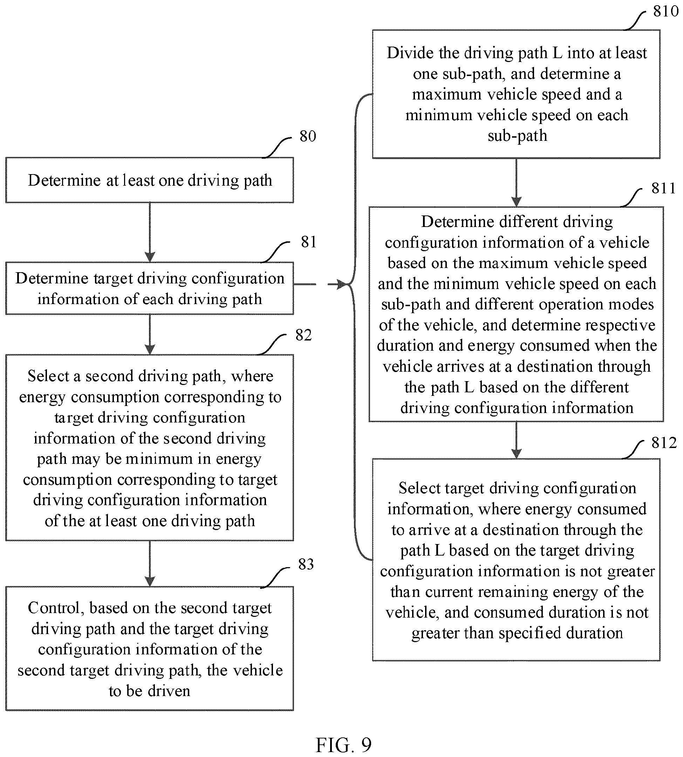

FIG. 9 is a processing flowchart of another driving planning method according to an embodiment of this application. The method may be performed by the driving planning module in the automated driving system in FIG. 2, or may be performed by a chip in the driving planning module. The following processing processes are included:

First, the driving planning module may perform step 301 to step 303 in FIG. 3. Details are not described herein again. For details, refer to the foregoing description in FIG. 3. After step 303 is performed, the following steps start to be performed:

Step 80: The driving planning module determines at least one driving path of the vehicle from the departure place to the destination. The at least one driving path may be obtained through calculation by the navigation module in the automated driving system in FIG. 2 based on information about the destination entered by the user in the user interface and with reference to the map road topology information.

Step 81: The driving planning module performs the following processing on each of the at least one driving path, to obtain target driving configuration information corresponding to each driving path.

For example, a driving path L is used as an example, and the driving path L may be any one of the at least one driving path. The following process provides a process of obtaining the target driving configuration information corresponding to the driving path L. The process specifically includes the following steps.

Step 810: The driving planning module divides the driving path L into at least one sub-path, and determines a maximum vehicle speed and a minimum vehicle speed on each sub-path. The maximum vehicle speed may be determined based on a road type-based speed limit, a weather type-based speed limit, and a congestion condition-based speed limit on the corresponding sub-path. The minimum vehicle speed may be an allowable minimum vehicle speed at which the vehicle is most energy-saving.

Step 811: The driving planning module determines different driving configuration information of the vehicle based on the maximum vehicle speed and the minimum vehicle speed on each sub-path and different operation modes of the vehicle on the driving path L, and determines respective duration and energy consumed when the vehicle arrives at the destination through the driving path L based on the different driving configuration information.

Step 812: Obtain current remaining energy of the vehicle, and select, based on an ascending order of energy consumption from the different driving configuration information determined in step 811, target driving configuration information that meets a second condition. The second condition may include a first sub-condition and a second sub-condition. The first sub-condition may specifically mean that energy consumed when the vehicle arrives at the destination from the departure place through the driving path L based on the target driving configuration information is less than the current remaining energy of the vehicle. The second sub-condition may specifically mean that duration consumed when the vehicle arrives at the destination from the departure place through the driving path L based on the target driving configuration information is not greater than specified duration. The specified duration may be duration between a time point at which the vehicle leaves the departure place and the specified time point, and the specified time point may be a time point at which the user requests to arrive at the destination.

It should be understood that in step 812, the different driving configuration information may be first sorted based on an ascending order of energy consumption, and then the target driving configuration information that is the first to meet the second condition is selected from the sorted different driving configuration information. The target driving configuration information may be found from the plurality of pieces of driving configuration information more quickly, to improve efficiency of path planning.

Specifically, when processing in step 810 to step 812 is performed on each of the at least one driving path, target driving configuration information corresponding to each driving path may be determined.

Step 82: The driving planning module selects a second driving path from the at least one driving path as the target driving path. The second driving path may be a driving path that corresponds to minimum energy consumption in target driving configuration information corresponding to the at least one driving path.

Step 83: The driving planning module delivers instructions to the trajectory tracker and the executor based on the second driving path and target driving configuration information of the second driving path, to control the vehicle to be automatically driven to the destination through the second driving path. Therefore, the driving planning module can plan a driving path with less energy consumption with reference to an actual condition of the vehicle, to better meet a user requirement.

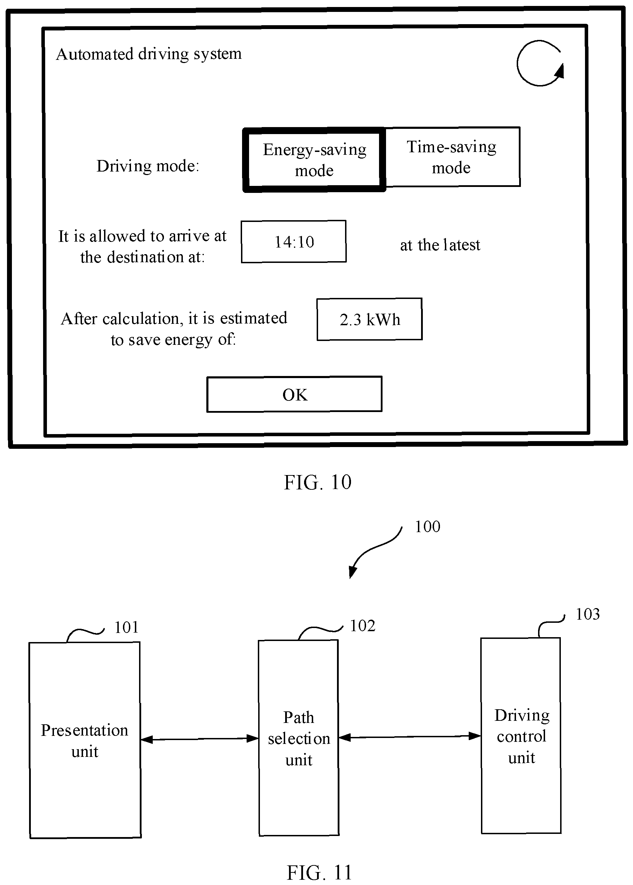

With reference to a specific example, the following describes in detail the path planning method based on the energy-saving mode in the foregoing embodiment of this application shown in FIG. 9. As shown in FIG. 10, after a user starts an automatic vehicle and enters a destination in the user interface, the driving planning module may obtain remaining energy of the vehicle from the energy storage module. The navigation module may obtain N driving paths to the destination based on prestored road topology information, prompt the user to select a corresponding driving mode in the user interface, and prompt the user to set an expected latest time point of arrival at the destination, namely, the specified time point described above. In the user interface shown in FIG. 10, an example in which driving modes include the time-saving mode and the energy-saving mode is used for description. The user may select an energy-saving driving mode icon. After the energy-saving driving mode icon is selected, the driving planning module may select a target driving path that is most energy-saving in the N driving paths on the basis that the current remaining energy of the vehicle can ensure the vehicle to arrive at the destination before the user-set latest arrival time point (the figure shows that the vehicle is allowed to arrive at the destination at 14:10 at the latest), and provide target driving configuration information for arriving at the destination from the departure place through the selected target driving path. In this way, the executor may control a braking system and a driving system of the vehicle based on the target driving configuration information of the target driving path provided by the driving planning module.

The foregoing examples provided in FIG. 6, FIG. 7, and FIG. 8 are still used for description. For specific descriptions and processing processes of FIG. 6, FIG. 7, and FIG. 8, refer to the detailed descriptions of the first driving planning solution based on the time-saving mode. Details are not described herein again. Differences are that different vehicle speed configurations on the three sub-paths AB, BC, and CD on the path 1 in the foregoing example may be combined with different operation modes, to obtain a driving configuration information table that is formed by different driving configuration information and that is different from Table 1. For details, refer to Table 2. Driving configuration information the further forward in Table 2 usually includes a smaller vehicle speed, a smaller acceleration and deceleration in an operation mode, longer corresponding consumed time, and lower corresponding energy consumption. However, driving configuration information the further back in Table 2 usually includes a larger vehicle speed, a larger acceleration and deceleration in an operation mode, shorter corresponding consumed time, and higher corresponding energy consumption.

**Table 2**

| Parameter | Speed allocation | Operation mode (acceleration/ braking level) | Consumed duration | Energy consumption |
|---|---|---|---|---|
| Driving configuration information i-1 | $V_{min}$ is configured on AB, BC, and CD | Economic | T1 | E1 |
| Driving configuration information i-2 | $V_{min}$ is configured on AB, BC, and CD | Normal | T2 | E2 |
| Driving configuration information i-3 | $V_{min}$ is configured on AB, BC, and CD | Sport | T3 | E3 |
| Driving configuration information i-4 | A vehicle speed on the road section AB is increased by $\Delta V$, and vehicle speeds on the road sections BC and CD remain unchanged | Economic | T4 | E4 |
| Driving configuration information i-5 | A vehicle speed on the road section AB is increased by $\Delta V$, and vehicle speeds on the road sections BC and CD remain unchanged | Normal | T5 | E5 |

(continued)

| Parameter | Speed allocation | Operation mode (acceleration/ braking level) | Consumed duration | Energy consumption |
|---|---|---|---|---|
| Driving configuration information i-6 | A vehicle speed on the road section AB is increased by $\Delta V$, and vehicle speeds on the road sections BC and CD remain unchanged | Sport | T6 | E6 |
| ... | ... | ... | | |
| Driving configuration information i-N | Vehicle speeds on the road sections AB and BC are increased by $\Delta V$, and a vehicle speed on the road section CD remains unchanged | Economic | T7 | E7 |
| Driving configuration information iN+1 | Vehicle speeds on the road sections AB and BC are increased by $\Delta V$, and a vehicle speed on the road section CD remains unchanged | Normal | T8 | E8 |
| Driving configuration information iN+2 | Vehicle speeds on the road sections AB and BC are increased by $\Delta V$, and a vehicle speed on the road section CD remains unchanged | Sport | T9 | E9 |
| ... | ... | ... | | |
| Driving configuration information i-M | Vehicle speeds on the road sections AB, BC, and CD are increased to $V_{max}$ | Economic | T10 | E10 |
| Driving configuration information i-M+1 | Vehicle speeds on the road sections AB, BC, and CD are increased to $V_{max}$ | Normal | T11 | E11 |
| Driving configuration information i-M+2 | Vehicle speeds on the road sections AB, BC, and CD are increased to $V_{max}$ | Sport | T12 | E12 |

A row in Table 2 represents one piece of driving configuration information. Explanation for Table 2 is as follows: For example, in the driving configuration information i-1, driving at most energy-saving $V_{min}$ shown in FIG. 7 is performed on all the three sub-paths AB, BC, and CD on the path 1, and the economic mode is selected for the operation mode. In this configuration, consumed duration required by the vehicle to arrive at the destination is T1. The consumed duration T1 may also be determined based on the formula 1, and details are not described herein again. For a process of determining corresponding energy consumption, refer to details in the first driving planning solution based on the time-saving mode. Details are not described herein again.

For explanations for the driving configuration information i-2 to the driving configuration information i-M+2, refer to Table 1 and the driving configuration information i-1. Details are not described herein again.

Based on the driving configuration information in Table 2, the driving planning module may determine the target driving configuration information in which consumed duration is not greater than duration between the user-set latest time point of arrival at the destination and the time point of departure from the departure place and energy consumption meets a requirement that the current remaining energy of the vehicle ensures the vehicle arrives at the destination.

It may be learned from the driving configuration information table 2 that, in the driving configuration information items, the speed on each sub-path continuously increases. Therefore, it may be learned that values of consumed duration corresponding to T1 ... T12 in the second right column in the columns should be sorted in descending order, and values of energy consumption corresponding to E1 ... E12 in the rightmost column should be sorted in ascending order. To be specific, the vehicle consumes longest time (namely, T1) to automatically drive from the departure place to the destination based on the driving configuration information (namely, the driving configuration information i-1) in the first row, and consumes shortest time (namely, T12) to automatically drive from the departure place to the destination based on the driving configuration information (namely, the driving configuration information i-M+2) in the last row. However, the vehicle consumes minimum energy to automatically drive from the departure place to the destination based on the driving configuration information i-1 in the first row, but may consume longest time. Therefore, the user-set expected latest time point of arrival at the destination is also considered.

Based on this analysis, in this embodiment of this application, driving configuration information needs to be selected from the driving configuration information with longest consumed duration to the driving configuration information with shortest consumed duration in Table 2, or driving configuration information needs to be selected from the driving configuration information with minimum energy consumption to the driving configuration information with maximum energy consumption, to find the target driving configuration information in which consumed duration is not greater than duration (referred to as specified duration for short below) between a user-set latest arrival time point and a departure time point of the vehicle, and energy consumed to arrive at the destination is less than current remaining energy (referred to as remaining energy for short below) of the vehicle.

For example, starting from the driving configuration information i-1 in the first row in Table 2, whether the consumed duration T1 corresponding to the driving configuration information i-1 is not greater than the specified duration is determined. If yes, whether the energy consumption E1 corresponding to the driving configuration information i-1 is less than the remaining energy is determined. If yes, the driving configuration information i-1 is the target driving configuration information selected for the path 1.

If the consumed duration T1 corresponding to the driving configuration information i-1 is greater than the specified duration, or if the energy consumption E1 corresponding to the driving configuration information i-1 is not less than the remaining energy, whether the consumed duration T2 corresponding to the driving configuration information i-2 is less than the specified duration is further determined. If yes, whether the energy consumption E2 corresponding to the driving configuration information i-2 is less than the remaining energy is further determined. If yes, the driving configuration information i-2 is the target driving configuration information selected for the path 1.

If the consumed duration T2 corresponding to the driving configuration information i-2 is greater than the specified duration, or if the energy consumption E1 corresponding to the driving configuration information i-2 is not less than the remaining energy, whether the consumed duration T3 corresponding to the driving configuration information i-3 is less than the specified duration is further determined ... and so on, until target driving configuration information 1 corresponding to the path 1 in the driving configuration information table 2 is found.

Certainly, to avoid inconvenience caused to the user because the vehicle cannot arrive at the destination before the user-set latest arrival time point because a traffic congestion condition on the driving path changes in a process in which the vehicle is driven to the destination, in the foregoing determining process, after consumed duration required when the vehicle arrives at the destination from the departure place based on one piece of driving configuration information is calculated each time, whether the consumed duration is not greater than a difference between the specified duration and a second reserved value s1 may be specifically determined. The second reserved value s1 may be pre-calculated based on a traffic congestion condition on the at least one driving path that is determined by the navigation module for the vehicle from the departure place to the destination, and is stored in the driving planning module.

Similarly, when the vehicle arrives at the destination, to avoid inconvenience caused to the user because energy exhaustion prevents the vehicle from arriving at an energy supplemental station (such as a gas station or a charging station), in the foregoing determining process, after total energy consumption required when the vehicle arrives at the destination from the departure place through the path 1 based on one piece of driving configuration information is calculated each time, values of the total energy consumption and a difference between the current remaining energy of the vehicle and a first reserved value s2 may be specifically determined. The first reserved value s2 is usually a value of energy consumption required when the vehicle arrives at an energy supplemental station from the destination.

In addition, for the energy consumption of the vehicle from the departure place to the destination calculated by the driving planning module based on one piece of driving configuration information, refer to details in the foregoing first driving planning solution based on the time-saving mode. Details are not described herein again.

According to the same processing manner, the driving planning module may determine target driving configuration information 2 of the path 2 and determine target driving configuration information 3 of the path 3. It is assumed that energy consumption corresponding to the target driving configuration information 1 determined for the path 1 is 1000 kWh, energy consumption corresponding to the target driving configuration information 2 determined for the path 2 is 1020 kWh, energy consumption corresponding to the target driving configuration information 3 determined for the path 3 is 1033 kWh, and the current remaining energy of the vehicle is 1020 kWh. The vehicle may be controlled to automatically arrive at the destination from the departure place through the path 1 based on the target driving configuration information selected for the path 1.

Then, the driving planning module may send information about a selected target path such as information about the path 1, and the target driving configuration information of the path 1, to the trajectory tracker. The trajectory tracker sends a corresponding driving instruction to the executor based on the path 1 and the target driving configuration information of the path 1, so that when the vehicle automatically arrives at the destination from the departure place, short time is consumed and remaining energy of the vehicle can ensure that the vehicle arrives at the destination.

In addition, the driving planning module may further calculate, based on the selected target driving path and the target driving configuration information, energy that can be saved by energy consumed when the vehicle arrives at the destination from the departure place through the target driving path compared with energy consumed on a driving path with maximum energy consumption in other driving paths determined by the navigation module for the vehicle from the departure place to the destination, and display calculated saved energy in the user interface shown in FIG. 10. As shown in FIG. 9, "After calculation, it is estimated to save energy of 2.3 kWh" may be displayed, to improve user experience.

It can be learned that, according to the foregoing driving planning solution based on the energy-saving mode, when the user selects the energy-saving driving mode icon in the user interface, the driving planning module may calculate, based on the current remaining energy condition of the vehicle, a driving path that is most energy-saving and on which the vehicle can arrive at the destination before the user' expected time point of arrival at the destination within an allowable driving distance of the current remaining energy of the vehicle, and may further present information about the saved energy to the user via the user interface. Therefore, a more feasible driving planning solution can be provided based on the actual condition of the vehicle, to improve user experience.

Based on the foregoing method embodiments, embodiments of this application further provide a driving planning apparatus. The driving planning apparatus may be a vehicle driving planning module in FIG. 1, or integrated into a vehicle driving planning module in FIG. 1. The driving planning apparatus may be the driving planning module in FIG. 2, or integrated into the driving planning module in FIG. 2. Refer to FIG. 11. The driving planning apparatus 100 includes a presentation unit 101, a path selection unit 102, and a driving control unit 103. The following describes functions and contacts of the units of the driving planning apparatus 100 during vehicle driving route planning.

When a user selects the time-saving mode shown in FIG. 5, a feasible solution may be as follows:

The presentation unit 101 is configured to present a time-saving driving mode icon and an energy-saving driving mode icon in a user interface of a vehicle. The time-saving driving mode icon indicates a time-saving mode in driving modes, and the energy-saving driving mode icon indicates an energy-saving mode in the driving modes. When the vehicle is driven in the time-saving mode, remaining energy of the vehicle can ensure that the vehicle consumes shortest time to arrive at a destination from a departure place. When the vehicle is driven in the energy-saving mode, remaining energy of the vehicle can ensure that the vehicle consumes minimum energy to arrive at the destination from the departure place before a specified time point.

The path selection unit 102 is configured to receive a driving mode selection instruction based on the time-saving driving mode icon and the energy-saving driving mode icon that are presented by the presentation unit, and select a target driving path from at least one driving path of the vehicle from the departure place to the destination based on a driving mode selected based on the driving mode selection instruction.

For example, when the driving mode selected based on the driving mode selection instruction is the time-saving mode, and when selecting the target driving path from the at least one driving path of the vehicle from the departure place to the destination based on the driving mode selected based on the driving mode selection instruction, the path selection unit 102 may be specifically configured to:

divide a driving path L into at least one sub-path, and determine a maximum vehicle speed and a minimum vehicle speed on each sub-path, where the maximum vehicle speed is determined based on a road type-based speed limit, a weather type-based speed limit, and a congestion condition-based speed limit on the corresponding sub-path, and the minimum vehicle speed is a preset uniform driving vehicle speed at which the vehicle is most energy-saving; determine different driving configuration information of the vehicle on the driving path L based on the maximum vehicle speed and the minimum vehicle speed on each sub-path and different operation modes of the vehicle, and determine respective duration consumed when the vehicle arrives at the destination from the departure place through the driving path L based on the different driving configuration information; obtain current remaining energy of the vehicle, and select, from the different driving configuration information based on an ascending order of consumed duration, driving configuration information that is the first to meet a first condition as target driving configuration information of the driving path L, where the meeting the first condition specifically means that energy required when the vehicle arrives at the destination from the departure place through the driving path L based on the target driving configuration information is less than the current remaining energy of the vehicle; and select a first driving path from the at least one driving path as the target driving path, where the first driving path is a driving path that corresponds to shortest consumed duration in target driving configuration information corresponding to the at least one driving path.

Optionally, the first condition may specifically mean that energy required when the vehicle arrives at the destination from the departure place through the driving path L based on the target driving configuration information is not greater than a difference between the current remaining energy of the vehicle and a first reserved value. The first reserved value is a value of energy required when the vehicle arrives at an energy supplemental station near the destination from the destination.

The driving control unit 103 is configured to control, based on the target driving path selected by the path selection unit 102 and the target driving configuration information of the target driving path, the vehicle to be driven.

When a user selects the time-saving mode shown in FIG. 5, another feasible solution may be as follows:
The presentation unit 101 is configured to present a time-saving driving mode icon and an energy-saving driving mode icon in a user interface of a vehicle. The time-saving driving mode icon indicates a time-saving mode in driving modes, and the energy-saving driving mode icon indicates an energy-saving mode in the driving modes. When the vehicle is driven in the time-saving mode, remaining energy of the vehicle can ensure that the vehicle consumes shortest time to arrive at a destination from a departure place. When the vehicle is driven in the energy-saving mode, remaining energy of the vehicle can ensure that the vehicle consumes minimum energy to arrive at the destination from the departure place before a specified time point.

The path selection unit 102 is configured to receive a driving mode selection instruction based on the time-saving driving mode icon and the energy-saving driving mode icon that are presented by the presentation unit. When a driving mode selected based on the driving mode selection instruction is the time-saving mode, and when selecting a target driving path from at least one driving path of the vehicle from the departure place to the destination based on the driving mode selected based on the driving mode selection instruction, the path selection unit 102 may be specifically configured to:
obtain current remaining energy of the vehicle; determine candidate driving paths from the at least one driving path of the vehicle from the departure place to the destination, where the current remaining energy of the vehicle is not exhausted when the vehicle arrives at the destination from the departure place through the candidate driving path; and select, from the candidate driving paths, a driving path through which the vehicle consumes shortest time to arrive at the destination from the departure place as the target driving path.

The driving control unit 103 is configured to control, based on the target driving path selected by the path selection unit 102 and the target driving configuration information of the target driving path, the vehicle to be driven.

When a user selects the energy-saving mode shown in FIG. 10, a feasible solution may be as follows:
The presentation unit 101 is configured to present a time-saving driving mode icon and an energy-saving driving mode icon in a user interface of a vehicle. The time-saving driving mode icon indicates a time-saving mode in driving modes, and the energy-saving driving mode icon indicates an energy-saving mode in the driving modes. When the vehicle is driven in the time-saving mode, remaining energy of the vehicle can ensure that the vehicle consumes shortest time to arrive at a destination from a departure place. When the vehicle is driven in the energy-saving mode, remaining energy of the vehicle can ensure that the vehicle consumes minimum energy to arrive at the destination from the departure place before a specified time point.

The path selection unit 102 is configured to receive a driving mode selection instruction based on the time-saving driving mode icon and the energy-saving driving mode icon that are presented by the presentation unit, and select a target driving path from at least one driving path of the vehicle from the departure place to the destination based on a driving mode selected based on the driving mode selection instruction.

For example, when the driving mode selected based on the driving mode selection instruction is the energy-saving mode, and when selecting the target driving path from the at least one driving path of the vehicle from the departure place to the destination based on the driving mode selected based on the driving mode selection instruction, the path selection unit 102 may be specifically configured to:
perform the following processing on any driving path L in the at least one driving path: dividing the driving path L into at least one sub-path, and determining a maximum vehicle speed and a minimum vehicle speed on each sub-path, where the maximum vehicle speed is determined based on a road type-based speed limit, a weather type-based speed limit, and a congestion condition-based speed limit on the corresponding sub-path, and the minimum vehicle speed is a preset uniform driving vehicle speed at which the vehicle is most energy-saving; determining different driving configuration information of the vehicle on the driving path L based on the maximum vehicle speed and the minimum vehicle speed on each sub-path and different operation modes of the vehicle, and determining respective duration and energy consumed when the vehicle arrives at the destination from the departure place through the driving path L based on the different driving configuration information; obtaining current remaining energy of the vehicle, and selecting, from the different driving configuration information based on an ascending order of energy consumption, driving configuration information that is the first to meet a second condition as target driving configuration information of the driving path L, where the second condition includes a first sub-condition and a second sub-condition, the first sub-condition specifically means that energy required when the vehicle arrives at the destination from the departure place through the driving path L based on the target driving configuration information is less than the current remaining energy of the vehicle, the second sub-condition specifically means that duration consumed when the vehicle arrives at the destination from the departure place through the driving path L based on the target driving configuration information is not greater than specified duration, the specified duration is duration between a time point at which the vehicle leaves the departure place and the specified time point, and the specified time point is a time point at which the user requests to arrive at the destination; and selecting a second driving path from the at least one driving path as the target driving path, where the second driving path is a driving path that corresponds to minimum energy consumption in target driving configuration information corresponding to the at least one driving path.

Optionally, the first sub-condition may specifically mean that energy consumed when the vehicle arrives at the destination from the departure place through the driving path L based on the target driving configuration information is not greater than a difference between the current remaining energy of the vehicle and a second reserved value. The second reserved value is a value of energy required when the vehicle arrives at an energy supplemental station near the destination from the destination.

Optionally, the second sub-condition may specifically mean that duration consumed when the vehicle arrives at the destination from the departure place through the driving path L based on the target driving configuration information is not greater than a difference between the specified duration and a third reserved value. The third reserved value may be preset and stored based on a traffic congestion condition on the at least one driving path.

The driving control unit 103 is configured to control, based on the target driving path selected by the path selection unit 102 and the target driving configuration information of the target driving path, the vehicle to be driven.

When a user selects the energy-saving mode shown in FIG. 10, another feasible solution may be as follows: The presentation unit 101 is configured to present a time-saving driving mode icon and an energy-saving driving mode icon in a user interface of a vehicle. The time-saving driving mode icon indicates a time-saving mode in driving modes, and the energy-saving driving mode icon indicates an energy-saving mode in the driving modes. When the vehicle is driven in the time-saving mode, remaining energy of the vehicle can ensure that the vehicle consumes shortest time to arrive at a destination from a departure place. When the vehicle is driven in the energy-saving mode, remaining energy of the vehicle can ensure that the vehicle consumes minimum energy to arrive at the destination from the departure place before a specified time point.

When the driving mode selected based on the driving mode selection instruction is the energy-saving mode, and when selecting the target driving path from the at least one driving path of the vehicle from the departure place to the destination based on the driving mode selected based on the driving mode selection instruction, the path selection unit 102 may be specifically configured to:

first obtain current remaining energy of the vehicle; then determine candidate driving paths from the at least one driving path of the vehicle from the departure place to the destination, where the current remaining energy of the vehicle is not exhausted when the vehicle arrives at the destination from the departure place through the candidate driving path; and next select, from the candidate driving paths, a driving path through which the vehicle consumes minimum energy to arrive at the destination from the departure place before the specified time point as the target driving path.

The driving control unit 103 is configured to control, based on the target driving path selected by the path selection unit 102 and the target driving configuration information of the target driving path, the vehicle to be driven.

For example, the operation mode of the vehicle may include one or more of a sport operation mode, a normal operation mode, and an eco operation mode. Acceleration/deceleration in the sport operation mode is greater than that in the normal operation mode, and the acceleration/deceleration in the normal operation mode is greater than that in the eco operation mode. Based on this, the different driving configuration information of the vehicle may be obtained by combining different vehicle speeds on the at least one sub-path and an operation mode used on the at least one sub-path

For example, the determining, by the path selection unit 102, respective duration consumed when the vehicle arrives at the destination based on the different driving configuration information may specifically meet a requirement of the following formula:

$$T = \sum_i \frac{S_i}{v_i} + \frac{v_i}{2a_{iAcc}} + \frac{v_i}{2a_{iDec}},$$

where

T may represent duration consumed when the vehicle arrives at the destination from the departure place through the driving path L based on first driving configuration information, and the first driving configuration information is any one of the different driving configuration information; and i may represent a sub-path identifier of a sub-path Li in the at least one sub-path, i ranges from 1 to n, and n is a quantity of sub-paths into which the driving path L is divided; $S_i$ represents a distance of the sub-path Li, and $v_i$ represents a driving speed in a uniform driving stage on the sub-path Li when the vehicle uses the first driving configuration information; $a_{iAcc}$ represents a maximum acceleration value in an operation mode used in the first driving configuration information; and $a_{iDec}$ represents a maximum deceleration value in the operation mode used in the first driving configuration information.

It should be noted that, in embodiments of this application, division into the modules is an example and is merely logical function division, and may be other division during actual implementation. In addition, function units in embodiments of this application may be integrated into one processing unit, or may exist alone physically, or two or more units may be integrated into one unit. The integrated unit may be implemented in a form of hardware, or may be implemented in a form of a software function unit.

When the integrated unit is implemented in the form of a software function unit and is sold or used as an independent product, the integrated unit may be stored in a computer-readable storage medium. Based on such an understanding, the technical solutions of this application essentially, or the part contributing to the prior art, or all or some of the technical solutions may be implemented in the form of a software product. The software product is stored in a storage medium and includes several instructions for instructing a computer device (which may be a personal computer, a server, or a network device) or a processor (processor) to perform all or some of the steps of the methods described in embodiments of this application. The foregoing storage medium includes: any medium that can store program code, such as a USB flash drive, a removable hard disk, a read-only memory (Read-Only Memory, ROM), a random access memory (Random Access Memory, RAM), a magnetic disk, or an optical disc.

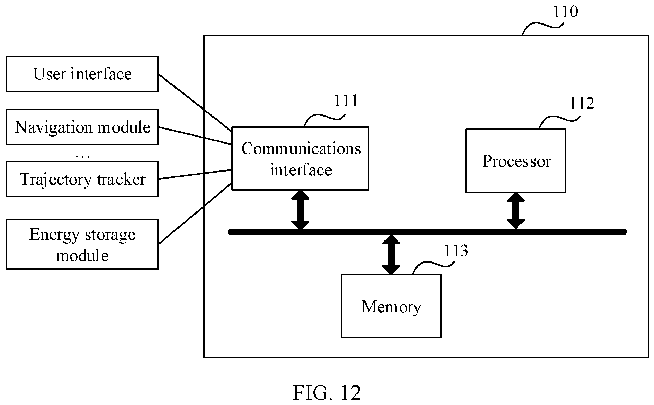

Based on the foregoing embodiments, embodiments of this application further provide a driving planning device, and the device may complete work of the vehicle driving planning module in FIG. 1, or complete work of the driving planning module in FIG. 2. Refer to FIG. 12. The device 110 includes a communications interface 111, a processor 112, and a memory 113.

The communications interface 111 and the memory 113 are connected to the processor 112. Optionally, the communications interface 111, the memory 113, and the processor 112 may be connected to each other through a bus. The bus may be a peripheral component interconnect (peripheral component interconnect, PCI) bus, an extended industry standard architecture (extended industry standard architecture, EISA) bus, or the like. The bus may be classified into an address bus, a data bus, a control bus, and the like. For ease of representation, only one thick line is used to represent the bus in FIG. 11, but this does not mean that there is only one bus or only one type of bus.

The communications interface 111 is configured to implement communication between a driving planning device and another component in an automated driving system. For example, the communications interface 111 obtains and determines information about at least one driving path of a vehicle to a destination from the navigation module, sends information about a calculated estimated arrival time point or information about calculated energy that can be saved to the user interface for displaying, and sends information about a selected target path and corresponding target driving configuration information to the trajectory tracker, or reads remaining energy information of the vehicle from the energy storage module.

The processor 112 is configured to implement the driving planning solution shown in FIG. 3, or implement the driving planning solution based on the time-saving mode shown in FIG. 4, or implement the driving planning solution based on the energy-saving mode shown in FIG. 9. For details, refer to descriptions in the foregoing embodiments shown in FIG. 4 and FIG. 9. Details are not described herein again. Optionally, the processor 112 may be a central processing unit (central processing unit, CPU) or another hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), generic array logic (generic array logic, GAL), or any combination thereof. The processor 112 may implement the foregoing functions by hardware or by hardware executing corresponding software.

The memory 113 is configured to store program instructions, data, and the like. Specifically, the program instruction may include program code, and the program code includes a computer operation instruction. The memory 113 may include a random access memory (random access memory, RAM), or may include a non-volatile memory (non-volatile memory), for example, at least one disk memory. The processor 112 executes a program stored in the memory 113, and implements the foregoing functions by using the foregoing components, to finally implement the method provided in the foregoing embodiments.

Based on the foregoing embodiments, embodiments of this application further provide an automated driving system. A structure of the automated driving system may be shown in FIG. 2. The driving planning module in FIG. 2 may be the driving planning apparatus shown in FIG. 11 or the driving planning device shown in FIG. 12.

Based on the foregoing embodiments, embodiments of this application further provide a computer program. When the computer program is run on a computer, the computer is enabled to perform the methods provided in the foregoing embodiments.

Based on the foregoing embodiments, embodiments of this application further provide a computer storage medium. The computer storage medium stores a computer program. When the computer program is executed by a computer, the computer is enabled to perform the methods provided in the foregoing embodiments.

Based on the foregoing embodiments, embodiments of this application further provide a chip. The chip is configured to read a computer program stored in a memory, to implement the methods provided in the foregoing embodiments.

Based on the foregoing embodiments, embodiments of this application further provide a chip system. The chip system includes a processor, configured to support a computer apparatus in implementing functions related to a terminal device in the methods provided in the foregoing embodiments. In a possible design, the chip system further includes a memory, and the memory is configured to store a program and data that are necessary for the computer apparatus. The chip system may include a chip, or may include a chip and another discrete component.

Persons skilled in the art should understand that embodiments of this application may be provided as a method, a system, or a computer program product. Therefore, this application may use a form of hardware only embodiments, software only embodiments, or embodiments with a combination of software and hardware. In addition, this application may use a form of a computer program product that is implemented on one or more computer-usable storage media (including but not limited to a disk memory, a CD-ROM, an optical memory, and the like) that include computer-usable program code.

This application is described with reference to the flowcharts and/or block diagrams of the method, the device (system), and the computer program product according to this application. It should be understood that computer program instructions may be used to implement each process and/or each block in the flowcharts and/or the block diagrams and a combination of a process and/or a block in the flowcharts and/or the block diagrams. The computer program instructions may be provided for a general-purpose computer, a dedicated computer, an embedded processor, or a processor of another programmable data processing device to generate a machine, so that the instructions executed by the computer or the processor of another programmable data processing device generate an apparatus for implementing a specific function in one or more processes in the flowcharts and/or in one or more blocks in the block diagrams.

These computer program instructions may alternatively be stored in a computer-readable memory that can indicate a computer or another programmable data processing device to work in a specific manner, so that the instructions stored in the computer-readable memory generate an artifact that includes an instruction apparatus. The instruction apparatus implements a specific function in one or more processes in the flowcharts and/or in one or more blocks in the block diagrams.

The computer program instructions may be loaded onto the computer or another programmable data processing device, so that a series of operations and steps are performed on the computer or the another programmable device, thereby generating computer-implemented processing. Therefore, the instructions executed on the computer or the another programmable device provide steps for implementing a specific function in one or more processes in the flowcharts and/or in one or more blocks in the block diagrams.

It is clear that a person skilled in the art can make various modifications and variations to this application without departing from the scope of this application. This application is intended to cover these modifications and variations of this application provided that they fall within the scope of the claims of this application and their equivalent technologies.

**Claims**

1. A driving planning method, comprising:

   presenting a time-saving driving mode icon and an energy-saving driving mode icon in a user interface of a vehicle, wherein the time-saving driving mode icon indicates a time-saving mode in driving modes; the energy-saving driving mode icon indicates an energy-saving mode in the driving modes; when the vehicle is driven in the time-saving mode, remaining energy of the vehicle can ensure that the vehicle consumes shortest time to arrive at a destination from a departure place; and when the vehicle is driven in the energy-saving mode, remaining energy of the vehicle can ensure that the vehicle consumes minimum energy to arrive at the destination from the departure place before a specified time point;
   receiving a driving mode selection instruction, and selecting a target driving path from at least one driving path of the vehicle from the departure place to the destination based on a driving mode selected based on the driving mode selection instruction; and
   controlling the vehicle to be driven through the target driving path.

2. The method according to claim 1, wherein the driving mode selected based on the driving mode selection instruction is the time-saving mode, and the selecting a target driving path from at least one driving path of the vehicle from the departure place to the destination based on a driving mode selected based on the driving mode selection instruction comprises:
   performing the following processing on any driving path L in the at least one driving path:

   dividing the driving path L into at least one sub-path, and determining a maximum vehicle speed and a minimum vehicle speed on each sub-path, wherein the maximum vehicle speed is determined based on a road type-based speed limit, a weather type-based speed limit, and a congestion condition-based speed limit on the corresponding sub-path, and the minimum vehicle speed is a preset uniform driving vehicle speed at which the vehicle is most energy-saving;
   determining different driving configuration information of the vehicle on the driving path L based on the maximum vehicle speed and the minimum vehicle speed on each sub-path and different operation modes of the vehicle, and determining respective duration consumed when the vehicle arrives at the destination from the departure place through the driving path L based on the different driving configuration information;

obtaining current remaining energy of the vehicle, and selecting, from the different driving configuration information based on an ascending order of consumed duration, driving configuration information that is the first to meet a first condition as target driving configuration information of the driving path L, wherein the meeting the first condition specifically means that energy required when the vehicle arrives at the destination from the departure place through the driving path L based on the target driving configuration information is less than the current remaining energy of the vehicle; and

selecting a first driving path from the at least one driving path as the target driving path, wherein the first driving path is a driving path that corresponds to shortest consumed duration in target driving configuration information corresponding to the at least one driving path.

3. The method according to claim 2, wherein the meeting the first condition specifically means that energy required when the vehicle arrives at the destination from the departure place through the driving path L based on the target driving configuration information is not greater than a difference between the current remaining energy of the vehicle and a first reserved value, wherein the first reserved value is a value of energy required when the vehicle arrives at an energy supplemental station near the destination from the destination.

4. The method according to claim 1, wherein the driving mode selected based on the driving mode selection instruction is the energy-saving mode, and the selecting a target driving path from at least one driving path of the vehicle from the departure place to the destination based on a driving mode selected based on the driving mode selection instruction comprises:

performing the following processing on any driving path L in the at least one driving path:

dividing the driving path L into at least one sub-path, and determining a maximum vehicle speed and a minimum vehicle speed on each sub-path, wherein the maximum vehicle speed is determined based on a road type-based speed limit, a weather type-based speed limit, and a congestion condition-based speed limit on the corresponding sub-path, and the minimum vehicle speed is a preset uniform driving vehicle speed at which the vehicle is most energy-saving;

determining different driving configuration information of the vehicle on the driving path L based on the maximum vehicle speed and the minimum vehicle speed on each sub-path and different operation modes of the vehicle, and determining respective duration and energy consumed when the vehicle arrives at the destination from the departure place through the driving path L based on the different driving configuration information;

obtaining current remaining energy of the vehicle, and selecting, from the different driving configuration information based on an ascending order of energy consumption, driving configuration information that is the first to meet a second condition as target driving configuration information of the driving path L, wherein the second condition comprises a first sub-condition and a second sub-condition, the first sub-condition specifically means that energy required when the vehicle arrives at the destination from the departure place through the driving path L based on the target driving configuration information is less than the current remaining energy of the vehicle, the second sub-condition specifically means that duration consumed when the vehicle arrives at the destination from the departure place through the driving path L based on the target driving configuration information is not greater than specified duration, the specified duration is duration between a time point at which the vehicle leaves the departure place and the specified time point, and the specified time point is a time point at which a user requests to arrive at the destination; and

selecting a second driving path from the at least one driving path as the target driving path, wherein the second driving path is a driving path that corresponds to minimum energy consumption in target driving configuration information corresponding to the at least one driving path.

5. The method according to claim 4, wherein the first sub-condition specifically means:

energy consumed when the vehicle arrives at the destination from the departure place through the driving path L based on the target driving configuration information is not greater than a difference between the current remaining energy of the vehicle and a second reserved value, wherein the second reserved value is a value of energy required when the vehicle arrives at an energy supplemental station near the destination from the destination.

6. The method according to claim 4 or 5, wherein the second sub-condition specifically means:

duration consumed when the vehicle arrives at the destination from the departure place through the driving path L based on the target driving configuration information is not greater than a difference between the specified duration and a third reserved value, wherein
the third reserved value is preset based on a traffic congestion condition on the at least one driving path.

7.  The method according to any one of claims 2 to 6, wherein the operation mode comprises one or more of a sport mode, a normal mode, and an eco mode, wherein acceleration/deceleration in the sport mode is greater than that in the normal mode, and the acceleration/deceleration in the normal mode is greater than that in the eco mode; and the different driving configuration information is obtained by combining different vehicle speeds on the at least one sub-path and an operation mode used on the at least one sub-path.

8.  The method according to any one of claims 2 to 7, wherein the determining respective duration consumed when the vehicle arrives at the destination from the departure place through the driving path L based on the different driving configuration information meets a requirement of the following formula:

$$T = \sum_i \frac{S_i}{v_i} + \frac{v_i}{2a_{iAcc}} + \frac{v_i}{2a_{iDec}},$$

wherein

T represents duration consumed when the vehicle arrives at the destination from the departure place through the driving path L based on first driving configuration information, and the first driving configuration information is any one of the different driving configuration information;
i represents a sub-path identifier of a sub-path Li in the at least one sub-path, i ranges from 1 to n, and n is a quantity of sub-paths into which the driving path L is divided;
$S_i$ represents a distance of the sub-path Li, and $v_i$ represents a driving speed in a uniform driving stage on the sub-path Li when the vehicle uses the first driving configuration information;
$a_{iAcc}$ represents a maximum acceleration value in an operation mode used in the first driving configuration information; and
$a_{iDec}$ represents a maximum deceleration value in the operation mode used in the first driving configuration information.

9.  The method according to claim 1, wherein the driving mode selected based on the driving mode selection instruction is the time-saving mode, and the selecting a target driving path from at least one driving path of the vehicle from the departure place to the destination based on a driving mode selected based on the driving mode selection instruction comprises:

obtaining current remaining energy of the vehicle;
determining candidate driving paths from the at least one driving path of the vehicle from the departure place to the destination, wherein the current remaining energy of the vehicle is not exhausted when the vehicle arrives at the destination from the departure place through the candidate driving path; and
selecting, from the candidate driving paths, a driving path through which the vehicle consumes shortest time to arrive at the destination from the departure place as the target driving path.

10. The method according to claim 1, wherein the driving mode selected based on the driving mode selection instruction is the energy-saving mode, and the selecting a target driving path from at least one driving path of the vehicle from the departure place to the destination based on a driving mode selected based on the driving mode selection instruction comprises:

obtaining current remaining energy of the vehicle;
determining candidate driving paths from the at least one driving path of the vehicle from the departure place to the destination, wherein the current remaining energy of the vehicle is not exhausted when the vehicle arrives at the destination from the departure place through the candidate driving path; and
selecting, from the candidate driving paths, a driving path through which the vehicle consumes minimum energy to arrive at the destination from the departure place before the specified time point as the target driving path.

11. The method according to claim 2, 3, or 9, further comprising:

when the driving mode selected based on the driving mode selection instruction is the time-saving mode, presenting an estimated arrival time point and/or estimated total consumed time in the user interface, wherein the estimated time point is the estimated arrival time point at which the vehicle arrives at the destination from the departure place through the target driving path, and the estimated total consumed time is estimated duration required when the vehicle arrives at the destination from the departure place through the target driving path.

12. The method according to claim 4, 5, 6, or 10, further comprising:

when the driving mode selected based on the driving mode selection instruction is the energy-saving mode, presenting estimated saved energy in the user interface, wherein
the estimated saved energy is a value of estimated energy that can be saved when the vehicle arrives at the destination from the departure place through the target driving path.

13. A driving planning apparatus, comprising:

a presentation unit, configured to present a time-saving driving mode icon and an energy-saving driving mode icon in a user interface of a vehicle, wherein the time-saving driving mode icon indicates a time-saving mode in driving modes; the energy-saving driving mode icon indicates an energy-saving mode in the driving modes; when the vehicle is driven in the time-saving mode, remaining energy of the vehicle can ensure that the vehicle consumes shortest time to arrive at a destination from a departure place; and when the vehicle is driven in the energy-saving mode, remaining energy of the vehicle can ensure that the vehicle consumes minimum energy to arrive at the destination from the departure place before a specified time point;
a path selection unit, configured to receive a driving mode selection instruction based on the time-saving driving mode icon and the energy-saving driving mode icon that are presented by the presentation unit, and select a target driving path from at least one driving path of the vehicle from the departure place to the destination based on a driving mode selected based on the driving mode selection instruction; and
a driving control unit, configured to control the vehicle to be driven through the target driving path.

14. The apparatus according to claim 13, wherein the driving mode selected based on the driving mode selection instruction is the time-saving mode, and when selecting the target driving path from the at least one driving path of the vehicle from the departure place to the destination based on the driving mode selected based on the driving mode selection instruction, the path selection unit is specifically configured to:
perform the following processing on any driving path L in the at least one driving path:

dividing the driving path L into at least one sub-path, and determining a maximum vehicle speed and a minimum vehicle speed on each sub-path, wherein the maximum vehicle speed is determined based on a road type-based speed limit, a weather type-based speed limit, and a congestion condition-based speed limit on the corresponding sub-path, and the minimum vehicle speed is a preset uniform driving vehicle speed at which the vehicle is most energy-saving;
determining different driving configuration information of the vehicle on the driving path L based on the maximum vehicle speed and the minimum vehicle speed on each sub-path and different operation modes of the vehicle, and determining respective duration consumed when the vehicle arrives at the destination from the departure place through the driving path L based on the different driving configuration information;
obtaining current remaining energy of the vehicle, and selecting, from the different driving configuration information based on an ascending order of consumed duration, driving configuration information that is the first to meet a first condition as target driving configuration information of the driving path L, wherein the meeting the first condition means that energy required when the vehicle arrives at the destination from the departure place through the driving path L based on the target driving configuration information is less than the current remaining energy of the vehicle; and
selecting a first driving path from the at least one driving path as the target driving path, wherein the first driving path is a driving path that corresponds to shortest consumed duration in target driving configuration information corresponding to the at least one driving path.

15. The apparatus according to claim 14, wherein the meeting the first condition specifically means that energy required when the vehicle arrives at the destination from the departure place through the driving path L based on the target driving configuration information is not greater than a difference between the current remaining energy of the vehicle and a first reserved value, wherein the first reserved value is a value of energy required when the vehicle arrives at an energy supplemental station near the destination from the destination.

16. The apparatus according to claim 13, wherein the driving mode selected based on the driving mode selection instruction is the energy-saving mode, and when selecting the target driving path from the at least one driving path of the vehicle from the departure place to the destination based on the driving mode selected based on the driving mode selection instruction, the path selection unit is specifically configured to:
perform the following processing on any driving path L in the at least one driving path:

dividing the driving path L into at least one sub-path, and determining a maximum vehicle speed and a minimum vehicle speed on each sub-path, wherein the maximum vehicle speed is determined based on a road type-based speed limit, a weather type-based speed limit, and a congestion condition-based speed limit on the corresponding sub-path, and the minimum vehicle speed is a preset uniform driving vehicle speed at which the vehicle is most energy-saving;
determining different driving configuration information of the vehicle on the driving path L based on the maximum vehicle speed and the minimum vehicle speed on each sub-path and different operation modes of the vehicle, and determining respective duration and energy consumed when the vehicle arrives at the destination from the departure place through the driving path L based on the different driving configuration information;
obtaining current remaining energy of the vehicle, and selecting, from the different driving configuration information based on an ascending order of energy consumption, driving configuration information that is the first to meet a second condition as target driving configuration information of the driving path L, wherein the second condition comprises a first sub-condition and a second sub-condition, the first sub-condition specifically means that energy required when the vehicle arrives at the destination from the departure place through the driving path L based on the target driving configuration information is less than the current remaining energy of the vehicle, the second sub-condition specifically means that duration consumed when the vehicle arrives at the destination from the departure place through the driving path L based on the target driving configuration information is not greater than specified duration, the specified duration is duration between time at which the vehicle leaves the departure place and the specified time point, and the specified time point is a time point at which a user requests to arrive at the destination; and
selecting a second driving path from the at least one driving path as the target driving path, wherein the second driving path is a driving path that corresponds to minimum energy consumption in target driving configuration information corresponding to the at least one driving path.

17. The apparatus according to claim 16, wherein the first sub-condition specifically means:
energy consumed when the vehicle arrives at the destination from the departure place through the driving path L based on the target driving configuration information is not greater than a difference between the current remaining energy of the vehicle and a second reserved value, wherein the second reserved value is a value of energy required when the vehicle arrives at an energy supplemental station near the destination from the destination.

18. The apparatus according to claim 16 or 17, wherein the second sub-condition specifically means:

duration consumed when the vehicle arrives at the destination from the departure place through the driving path L based on the target driving configuration information is not greater than a difference between the specified duration and a third reserved value, wherein
the third reserved value is preset based on a traffic congestion condition on the at least one driving path.

19. The apparatus according to any one of claims 14 to 18, wherein the operation mode comprises one or more of a sport mode, a normal mode, and an eco mode, wherein acceleration/deceleration in the sport mode is greater than that in the normal mode, and the acceleration/deceleration in the normal mode is greater than that in the eco mode; and the different driving configuration information is obtained by combining different vehicle speeds on the at least one sub-path and an operation mode used on the at least one sub-path.

20. The apparatus according to any one of claims 14 to 19, wherein the determining, by the path selection unit, respective duration consumed when the vehicle arrives at the destination from the departure place through the driving path L based on the different driving configuration information meets a requirement of the following formula:

$$T = \sum_i \frac{S_i}{v_i} + \frac{v_i}{2a_{iAcc}} + \frac{v_i}{2a_{iDec}},$$

wherein

T represents duration consumed when the vehicle arrives at the destination from the departure place through the driving path L based on first driving configuration information, and the first driving configuration information is any one of the different driving configuration information;

i represents a sub-path identifier of a sub-path Li in the at least one sub-path, i ranges from 1 to n, and n is a quantity of sub-paths into which the driving path L is divided;

$S_i$ represents a distance of the sub-path Li, and $v_i$ represents a driving speed in a uniform driving stage on the sub-path Li when the vehicle uses the first driving configuration information;

$\alpha_{iAcc}$ represents a maximum acceleration value in an operation mode used in the first driving configuration information; and

$\alpha_{iDec}$ represents a maximum deceleration value in the operation mode used in the first driving configuration information.

21. The apparatus according to claim 13, wherein the driving mode selected based on the driving mode selection instruction is the time-saving mode, and when selecting the target driving path from the at least one driving path of the vehicle from the departure place to the destination based on the driving mode selected based on the driving mode selection instruction, the path selection unit is specifically configured to:

obtain current remaining energy of the vehicle;

determine candidate driving paths from the at least one driving path of the vehicle from the departure place to the destination, wherein the current remaining energy of the vehicle is not exhausted when the vehicle arrives at the destination from the departure place through the candidate driving path; and

select, from the candidate driving paths, a driving path through which the vehicle consumes shortest time to arrive at the destination from the departure place as the target driving path.

22. The apparatus according to claim 13, wherein the driving mode selected based on the driving mode selection instruction is the energy-saving mode, and when selecting the target driving path from the at least one driving path of the vehicle from the departure place to the destination based on the driving mode selected based on the driving mode selection instruction, the path selection unit is specifically configured to:

obtain current remaining energy of the vehicle;

determine candidate driving paths from the at least one driving path of the vehicle from the departure place to the destination, wherein the current remaining energy of the vehicle is not exhausted when the vehicle arrives at the destination from the departure place through the candidate driving path; and

select, from the candidate driving paths, a driving path through which the vehicle consumes minimum energy to arrive at the destination from the departure place before the specified time point as the target driving path.

23. The apparatus according to claim 14, 15, or 21, wherein the presentation unit is further configured to:

when the driving mode selected based on the driving mode selection instruction is the time-saving mode, present an estimated arrival time point and/or estimated total consumed time in the user interface, wherein the estimated time point is the estimated arrival time point at which the vehicle arrives at the destination from the departure place through the target driving path, and the estimated total consumed time is estimated duration required when the vehicle arrives at the destination from the departure place through the target driving path.

24. The apparatus according to claim 16, 17, 18, or 22, wherein the presentation unit is further configured to:

when the driving mode selected based on the driving mode selection instruction is the energy-saving mode, present estimated saved energy in the user interface, wherein the estimated saved energy is a value of estimated energy that can be saved when the vehicle arrives at the destination from the departure place through the target driving path.

25. A driving planning device, comprising a memory and a processor, wherein

the memory stores one or more computer programs; and

the processor is configured to invoke the one or more computer programs to perform the method according to any one of claims 1 to 12.

26. An automated driving system, comprising a user interface and the driving planning apparatus according to any one of claims 13 to 24, or comprising a user interface and the driving planning device according to claim 25.

27. A computer program, wherein when the computer program is run on a computer, the computer is enabled to perform the method according to any one of claims 1 to 12.

28. A computer storage medium, wherein the computer storage medium stores a computer program. When the computer program is executed by a computer, the computer is enabled to perform the method according to any one of claims 1 to 12.

29. A chip, wherein the chip is configured to read a computer program stored in a memory, to perform the method according to any one of claims 1 to 12.

FIG. 1

User interface

Destination and mode selection

**Estimated arrival time point /saved energy**

Navigation module

Traffic information on N paths

Driving planning module

Feedback from the trajectory tracker

Speed, acceleration, and deceleration of each road section

Trajectory tracker

Torque command and braking command

Executor

Remaining energy

Energy storage module

FIG. 2

FIG. 3

Determine at least one driving path ⌐ 30

Divide the driving path L into at least one sub-path, and determine a maximum vehicle speed and a minimum vehicle speed on each sub-path ⌐ 310

Determine target driving configuration information for each driving path ⌐ 31

Determine different driving configuration information of a vehicle based on the maximum vehicle speed and the minimum vehicle speed on each sub-path and different operation modes of the vehicle, and determine respective duration consumed when the vehicle arrives at a destination through the path L based on the different driving configuration information ⌐ 311

Select a first driving path, where consumed time corresponding to target driving configuration information of the first driving path may be minimum in consumed time corresponding to target driving configuration information of the at least one driving path ⌐ 32

Select, based on an ascending order of consumed duration, target driving configuration information that is the first to meet a first condition, where the meeting the first condition means that energy required when the vehicle is driven to the destination through the path L based on the target driving configuration information is not greater than current remaining energy of the vehicle ⌐ 312

Control, based on the first target driving path and the target driving configuration information of the first target driving path, the vehicle to be driven ⌐ 33

FIG. 4

Automated driving system

Driving mode:

| Energy-saving mode | Time-saving mode |

After calculation, it is estimated to arrive at the destination at:

14:10

Estimated total consumed time:

50    minutes

FIG. 5

FIG. 6

FIG. 7

FIG. 8

810

Divide the driving path L into at least one sub-path, and determine a maximum vehicle speed and a minimum vehicle speed on each sub-path

80

Determine at least one driving path

81

Determine target driving configuration information of each driving path

811

Determine different driving configuration information of a vehicle based on the maximum vehicle speed and the minimum vehicle speed on each sub-path and different operation modes of the vehicle, and determine respective duration and energy consumed when the vehicle arrives at a destination through the path L based on the different driving configuration information

82

Select a second driving path, where energy consumption corresponding to target driving configuration information of the second driving path may be minimum in energy consumption corresponding to target driving configuration information of the at least one driving path

812

Select target driving configuration information, where energy consumed to arrive at a destination through the path L based on the target driving configuration information is not greater than current remaining energy of the vehicle, and consumed duration is not greater than specified duration

83

Control, based on the second target driving path and the target driving configuration information of the second target driving path, the vehicle to be driven

FIG. 9

Automated driving system

Driving mode:    | Energy-saving mode | Time-saving mode |

It is allowed to arrive at the destination at:    | 14:10 |    at the latest

After calculation, it is estimated to save energy of:    | 2.3 kWh |

| OK |

FIG. 10

100

| Presentation unit |    101

| Path selection unit |    102

| Driving control unit |    103

FIG. 11

FIG. 12

**INTERNATIONAL SEARCH REPORT**

| International application No. |
| --- |
| **PCT/CN2020/097114** |

| A. | CLASSIFICATION OF SUBJECT MATTER |
| --- | --- |

G01C 21/34(2006.01)i

According to International Patent Classification (IPC) or to both national classification and IPC

| B. | FIELDS SEARCHED |
| --- | --- |

Minimum documentation searched (classification system followed by classification symbols)

G01C

Documentation searched other than minimum documentation to the extent that such documents are included in the fields searched

Electronic data base consulted during the international search (name of data base and, where practicable, search terms used)

CNPAT, WPI, EPODOC, CNKI: 华为技术有限公司, 汽车, 路径, 路线, 规划, 导航, 节省, 节能, 耗能, 能耗, 耗油, 油耗, 省时, 用时, 时间, 最少, 最短, 模式, 操控, 驾驶, 速度, 剩余, vehicle, automobile, path, route, plan, guidance, consumption, time, short, fast, mode, speed, rest, save, economy

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| Y | CN 108981732 A (HANGZHOU ZHONGHENG CLOUD POWER INTERNET TECHNOLOGY CO., LTD.) 11 December 2018 (2018-12-11) description, paragraphs [0007]-[0123], and figure 1 | 1-29 |
| Y | CN 105865472 A (CHONGQING UNIVERSITY OF POSTS AND TELECOMMUNICATIONS) 17 August 2016 (2016-08-17) description, paragraphs [0003]-[0138], and figures 1-6 | 1-29 |
| A | CN 109596134 A (PING AN TECHNOLOGY SHENZHEN CO., LTD.) 09 April 2019 (2019-04-09) entire document | 1-29 |
| A | CN 104596534 A (ARCHERMIND TECHNOLOGY (NANJING) CO., LTD.) 06 May 2015 (2015-05-06) entire document | 1-29 |
| A | CN 103158704 A (HYUNDAI MOTOR COMPANY et al.) 19 June 2013 (2013-06-19) entire document | 1-29 |
| A | CN 107782327 A (GM GLOBAL TECH OPERATIONS INC.) 09 March 2018 (2018-03-09) entire document | 1-29 |

☑ Further documents are listed in the continuation of Box C.       ☑ See patent family annex.

| * | Special categories of cited documents: |
| --- | --- |
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
| --- | --- |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
| --- | --- |
| **12 August 2020** | **23 September 2020** |

| Name and mailing address of the ISA/CN | Authorized officer |
| --- | --- |
| **China National Intellectual Property Administration (ISA/ CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

| C. | DOCUMENTS CONSIDERED TO BE RELEVANT | |
|---|---|---|
| Category* | Citation of document, with indication, where appropriate, of the relevant passages | Relevant to claim No. |
| A | US 9739622 B2 (YUAN ZE UNIVERSITY) 22 August 2017 (2017-08-22)<br>entire document | 1-29 |
| A | US 8762050 B2 (NATIONAL TSING HUA UNIVERSITY) 24 June 2014 (2014-06-24)<br>entire document | 1-29 |

Form PCT/ISA/210 (second sheet) (January 2015)

**INTERNATIONAL SEARCH REPORT**
Information on patent family members

| International application No. |
| --- |
| **PCT/CN2020/097114** |

| Patent document cited in search report | | | Publication date (day/month/year) | Patent family member(s) | | | Publication date (day/month/year) |
| --- | --- | --- | --- | --- | --- | --- | --- |
| CN | 108981732 | A | 11 December 2018 | None | | | |
| CN | 105865472 | A | 17 August 2016 | CN | 105865472 | B | 10 May 2019 |
| CN | 109596134 | A | 09 April 2019 | None | | | |
| CN | 104596534 | A | 06 May 2015 | CN | 104596534 | B | 05 December 2017 |
| CN | 103158704 | A | 19 June 2013 | US | 8924146 | B2 | 30 December 2014 |
| | | | | KR | 20130066161 | A | 20 June 2013 |
| | | | | KR | 101326847 | B1 | 20 November 2013 |
| | | | | CN | 103158704 | B | 23 November 2016 |
| | | | | JP | 2013121821 | A | 20 June 2013 |
| | | | | US | 2013151142 | A1 | 13 June 2013 |
| CN | 107782327 | A | 09 March 2018 | US | 2018058868 | A1 | 01 March 2018 |
| | | | | US | 10215576 | B2 | 26 February 2019 |
| | | | | DE | 102017119453 | A1 | 01 March 2018 |
| US | 9739622 | B2 | 22 August 2017 | US | 2016162484 | A1 | 09 June 2016 |
| US | 8762050 | B2 | 24 June 2014 | US | 2013060469 | A1 | 07 March 2013 |

**REFERENCES CITED IN THE DESCRIPTION**

**Patent documents cited in the description**

• CN 201910944453